# EUROPEAN PATENT APPLICATION

(11) **EP 4 814 681 A1**
(43) Date of publication of application: **30.09.2026**
(21) Application number: 26158056.7
(22) Date of filing: 12.02.2026
(51) Int. Cl.: G06F 3/04845, G06F 3/04883, H04N 23/63, H04N 23/69

(54) **DISPLAY CONTROL APPARATUS, DISPLAY CONTROL METHOD, AND STORAGE MEDIUM**

(30) Priority: 26.03.2025 JP 2025051224
(71) Applicant: Canon Kabushiki Kaisha, Tokyo 146-8501 (JP)
(72) Inventor: MITO, Koji, Ohta-ku, Tokyo, 146-8501 (JP); SHIMOSE, Masaya, Ohta-ku, Tokyo, 146-8501 (JP); KAWASHIMA, Takumi, Ohta-ku, Tokyo, 146-8501 (JP); FUJIOKA, Masaki, Ohta-ku, Tokyo, 146-8501 (JP)
(74) Representative: TBK

(57) **Abstract**

A display control apparatus includes: an input means (202) for inputting an input image; an operation means (205) for receiving an operation of enlargement/reduction; and a display control means (201) for, while the operation means is receiving the operation of enlargement, superimposing a frame indicating a second region according to enlargement magnification on the input image in accordance with a first region displayed by a display means (206), and displaying, on the display means, the input image on which the frame is superimposed on the display means, and for, while the operation means is receiving the operation of reduction, superimposing the input image in accordance with a third region according to reduction magnification on a background image in accordance with the first region, and displaying, on the display means, the background image on which the input image is superimposed.

## Description

### TECHNICAL FIELD

The present disclosure relates to a display control apparatus, a display control method, and a program.

### BACKGROUND

In recent years, mounting of a wireless communication function or a wired connection function on cameras such as video cameras has become common. In addition, applications for controlling a camera remotely via a wireless or wired network (camera control applications) are made available for information terminals such as smartphones. In the camera control application, a function for displaying a video of the camera, a function for controlling image capturing, a function for assisting image capturing, a function for displaying information of the camera, a function for changing settings of the camera, and the like are provided. The function for controlling image capturing includes, for example, a function for controlling PTZ (pan, tilt, and zoom) of the camera. The function for assisting image capturing includes, for example, a function for superimposing a marker on the video of the camera in accordance with the video.

Smartphone applications are premised on operations using a touch panel. The operations using a touch panel include, for example, a pinch operation. The pinch operation is an operation of narrowing or widening two fingers on the touch panel. An operation of narrowing two fingers on the touch panel is generally called a pinch-in. In addition, an operation of widening two fingers on the touch panel is generally called a pinch-out. Some camera control applications follow a pinch operation on the video of the camera, and control a zoom magnification of the camera.

Conventionally, as a technology for improving operability of zoom control of a camera, there is a method of changing the zoom magnification of the camera after adjusting an angle of view after zooming. For example, in Japanese Patent Application Laid-Open No. 2016-082556, a technology is disclosed in which a region on a video of the camera is designated using start coordinates and end coordinates, and the zoom magnification of the camera is controlled based on a positional relationship between the start coordinates and the end coordinates.

### SUMMARY

In the camera control application, since the camera is controlled via a network, a time lag occurs from performing an operation until receiving a control result of the camera. For this reason, in a case in which the zoom magnification of the camera is controlled by using the pinch operation in the camera control application, since the video of the camera after zooming is displayed with a delay from the pinch operation, there is an issue in operability.

A function for displaying a marker on a video (image) captured by a camera is used mainly for confirming an angle of view of the image. However, in the technology disclosed in Japanese Patent Application Laid-Open No. 2016-082556, consideration was not given with respect to display of the marker while the angle of view of the image is being adjusted. For this reason, there was room for improvement with respect to the technology for adjusting the angle of view of the image.

The present disclosure is directed to improve technology for adjusting an angle of view of an image.

The present disclosure in its first aspect provides a display control apparatus specified in claim 1. Optional features are specified in claims 2 to 3 and 6 to 10.

The present disclosure in its second aspect provides a display control apparatus specified in claim 4. Optional features are specified in claims 5 to 10.

The present disclosure in its third aspect provides a display control method specified in claim 11 and 12.

The present disclosure in its fourth aspect provides a program specified in claim 13.

According to the present disclosure, technology for adjusting an angle of view of an image can be improved.

Features of the present disclosure will become apparent from the following description of embodiments with reference to the attached drawings. The following description of embodiments is described by way of example.

### BRIEF DESCRIPTION OF DRAWINGS

FIG. 1 is a configuration diagram of a system according to a First Embodiment.
FIG. 2 is a block diagram showing a configuration of the camera 100 according to the First Embodiment.
FIG. 3 is a block diagram showing a configuration of the mobile phone 200 according to the First Embodiment.
FIG. 4A and FIG. 4B are examples of a screen UI of the camera control application according to the First Embodiment.
FIGS. 5A to 5D are examples of a screen UI related to marker display of the camera control application according to the First Embodiment.
FIG. 6A and FIG. 6B are examples of a screen UI related to PTZ operation of the camera control application according to the First Embodiment.
FIGS. 7A to 7C are examples of images captured by the camera 100 according to the First Embodiment.
FIG. 8 is a diagram showing a direction and a displacement amount input by the PTZ operation of the camera control application according to the First Embodiment.
FIG. 9A and FIG. 9B are diagrams explaining a pinch operation according to the First Embodiment.
FIGS. 10A to 10C are diagrams showing zoom operation by pinch-in according to the First Embodiment.
FIGS. 11A to 11C are diagrams showing zoom operation by pinch-out according to the First Embodiment.
FIGS. 12A to 12H are diagrams showing angle of view adjustment and zoom operation by pinch-in according to the First Embodiment.
FIGS. 13A to 13H are diagrams showing angle of view adjustment and zoom operation by pinch-out according to the First Embodiment.
FIG. 14 is a flowchart of zoom angle of view adjustment processing according to the First Embodiment.
FIG. 15 is a diagram showing angle of view adjustment and PTZ operation by pinch-in according to the First Embodiment.
FIG. 16 is a diagram showing angle of view adjustment and PTZ operation by pinch-out according to the First Embodiment.
FIG. 17 is a flowchart of zoom angle of view adjustment processing according to the Second Embodiment.
FIG. 18A and FIG. 18B are display examples of an angle of view frame according to the Second Embodiment.
FIG. 19A and FIG. 19B are diagrams showing angle of view adjustment by pinch-in according to the Second Embodiment.
FIG. 20 is a flowchart of zoom angle of view adjustment processing according to the Third Embodiment.
FIG. 21 is a flowchart of zoom angle of view adjustment processing according to the Fourth Embodiment.
FIG. 22A and FIG. 22B are diagrams showing angle of view adjustment by pinch-in according to the Fourth Embodiment.
FIG. 23A and FIG. 23B are diagrams showing angle of view adjustment by pinch-out according to the Fourth Embodiment.
FIG. 24 is a flowchart of zoom angle of view adjustment processing according to the Fifth Embodiment.
FIG. 25 is a diagram showing angle of view adjustment and zoom operation by pinch-in according to the Fifth Embodiment.
FIG. 26 is a diagram showing angle of view adjustment and zoom operation by pinch-out according to the Fifth Embodiment.

### DESCRIPTION OF THE EMBODIMENTS

Hereinafter, an explanation will be provided with respect to modes for carrying out the present disclosure by using the drawings. It should be noted that a configuration for realizing the present disclosure is not limited only to the configurations described in the embodiments. A part of the configurations described in the embodiments may be omitted or replaced with equivalents within a range in which similar effects can be obtained.

### <First Embodiment>

### <System Configuration>

An explanation is provided with respect to a first embodiment of the present disclosure.

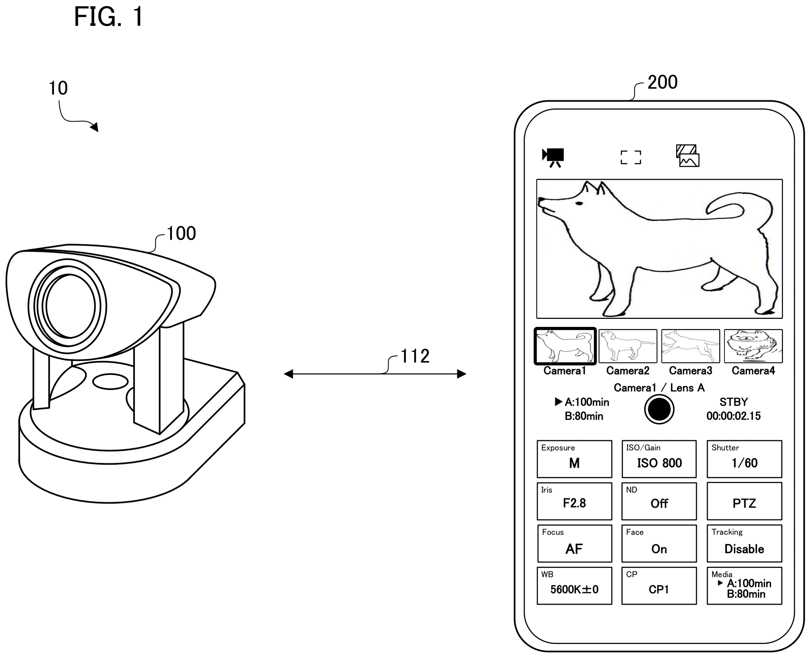

FIG. 1 is a system configuration diagram of a system according to a First Embodiment of the present invention. A system 10 is configured such that a camera 100 and a mobile phone 200 are connected via a network 112. Although the network 112 adopts Wi-Fi (registered trademark) in the present embodiment, the network 112 is not limited thereto. The network 112 may be substituted with, for example, Bluetooth (registered trademark) or a proprietary wireless communication method. In addition, the network 112 may be wired communication instead of wireless communication. That is, the network 112 can perform communication regardless of the communication method, such as RS-232C, RS-422A, USB (Universal Serial Bus), and Ethernet (registered trademark). However, the network 112 needs to be a communication method capable of transmitting and receiving video and setting values of the camera.

### <Configuration of Camera>

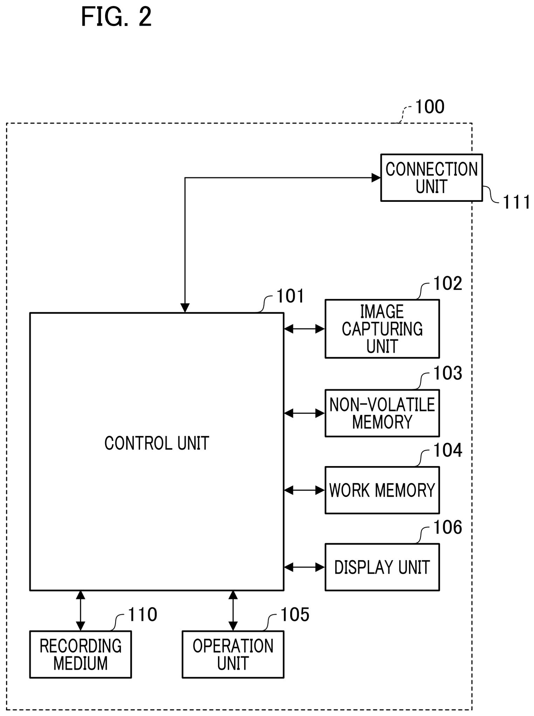

FIG. 2 is a block diagram showing a configuration of the camera 100 according to the First Embodiment. The camera 100 is an example of a data processing apparatus. It should be noted that, although description is provided with respect to the camera 100 here as an example of the data processing apparatus, the data processing apparatus according to the present disclosure is not limited thereto. For example, the data processing apparatus according to the present disclosure may be an information processing apparatus such as a so-called tablet device, a personal computer, and the like. The camera 100 is an example of an image capturing apparatus.

The camera 100 has a control unit 101. The control unit 101 controls each unit of the camera 100 in accordance with an input signal and a program described below. It should be noted that, instead of the control unit 101 controlling the entire apparatus, a plurality of hardware components may control the entire apparatus by sharing the processing.

The camera 100 has an image capturing unit 102. The image capturing unit 102 converts subject light formed as an image by a lens that is included in the image capturing unit 102 into an electrical signal, performs noise reduction processing and the like, and outputs digital data as image data. After the image data captured by the image capturing unit 102 is stored in a buffer memory, a predetermined calculation is performed at the control unit 101, and the image data is recorded in a recording medium 110. In addition, the image capturing unit 102 has a pan, tilt, and zoom mechanism, and executes pan, tilt, and zoom (telephoto control/wide-angle control) operations under control of the control unit 101.

The camera 100 has a non-volatile memory 103. The non-volatile memory 103 is an electrically erasable and recordable non-volatile memory, in which a program and the like described below executed by the control unit 101 are stored.

The camera 100 has a work memory 104. The work memory 104 is used as a buffer memory that temporarily holds image data captured by the image capturing unit 102, an image display memory of a display unit 106, a work area of the control unit 101, and the like.

The camera 100 has an operation unit 105. The operation unit 105 is used for accepting instructions from a user with respect to the camera 100. The operation unit 105 includes, for example, operation members such as a power button for the user to instruct ON/OFF of a power supply of the camera 100, a release switch for instructing image capturing, and a playback button for instructing playback of image data. In addition, a touch panel formed on a display unit 106 described below is also included in the operation unit 105. It should be noted that a release switch included in the operation unit 105 has SW1 and SW2. By the release switch becoming in a so-called half-pressed state, SW1 becomes ON. In this manner, instructions for performing image capturing preparation such as AF (Auto Focus) processing, AE (Auto Exposure) processing, AWB (Auto White Balance) processing, and EF (Flash Pre-emission) processing are accepted. In addition, by the release switch entering a so-called fully-pressed state, SW2 becomes ON. In this manner, instructions for performing image capturing are accepted. It should be noted that the operation unit 105 is not limited to the above-described content, and the operation unit 105 need only operate the camera 100. In addition, the operation unit 105 does not necessarily need to be built into the camera 100, and, for example, the operation unit 105 may be operated from an external apparatus.

The camera 100 has a display unit 106. The display unit 106 performs display of a viewfinder image when performing image capturing, display of captured image data, character display for interactive operation, and the like. It should be noted that the display unit 106 does not necessarily need to be built into the camera 100. The camera 100 can be connected to an internal or external display unit 106, and the camera 100 need only have at least a display control function for controlling display of the display unit 106.

The camera 100 has a recording medium 110. The recording medium 110 can record image data output from the image capturing unit 102. The recording medium 110 may be configured to be attachable to and detachable from the camera 100, or may be built into the camera 100. That is, the camera 100 need only have a unit for accessing at least the recording medium 110.

The camera 100 has a connection unit 111. The connection unit 111 is an interface for connecting to an external apparatus. The camera 100 of the present embodiment can perform exchange of data with an external apparatus via the connection unit 111. It should be noted that, in the present embodiment, the connection unit 111 includes an interface for communicating with an external apparatus via a wireless LAN. The control unit 101 realizes wireless communication with an external apparatus by controlling the connection unit 111. It should be noted that the communication method is not limited to the wireless LAN.

It should be noted that it is possible for the camera 100 in the present embodiment to operate as a client device in an infrastructure mode of wireless LAN communication. In a case in which the camera 100 operates as a client device, by connecting to a peripheral access point (hereinafter, AP), it is possible for the camera 100 to join a network formed by the AP. In addition, although the camera 100 in the present embodiment is a type of AP, it is possible for the camera 100 to also operate as a simplified AP having more limited functions (hereinafter, simplified AP). It should be noted that the AP in the present embodiment is an example of a relay apparatus. When the camera 100 operates as a simplified AP, the camera 100 by itself forms a network. Peripheral apparatuses of the camera 100 recognize the camera 100 as an AP, and it becomes possible for the peripheral apparatuses to join the network formed by the camera 100. As described above, it is assumed that a program for operating the camera 100 is held in the non-volatile memory 103. It should be noted that, although the camera 100 in the present embodiment is a type of AP, the camera 100 is a simplified AP that does not have a gateway function for transferring data received from a client device to an internet service provider, and the like. Accordingly, even if the camera 100 receives data from another apparatus joining the network formed by the camera 100 itself, it is not possible for the camera 100 to transfer the data to a network such as the Internet, and the like. Alternatively, the connection unit 111 may be an interface for wired communication instead of wireless communication. That is, the connection unit 111 may be an interface for wired communication such as RS-232C, RS-422A, USB, Ethernet (registered trademark), and the like, regardless of the communication method.

The above is the explanation of the camera 100. Next, an explanation will be provided with respect to the mobile phone 200 that is an example of an external apparatus.

### <Configuration of Display Control Apparatus>

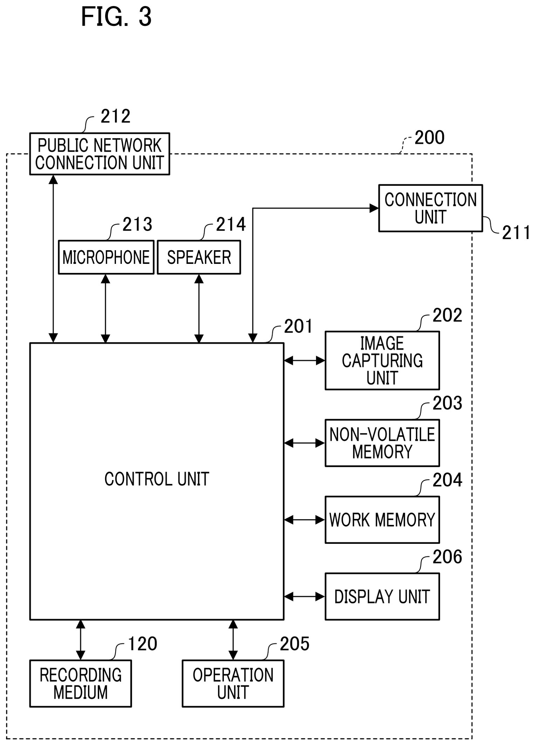

FIG. 3 is a block diagram showing a configuration of the mobile phone 200 according to the First Embodiment. The mobile phone 200 is an example of a display control apparatus. It should be noted that, although description is provided with respect to a mobile phone here as an example of the display control apparatus, the display control apparatus is not limited thereto. For example, the display control apparatus may be an information processing apparatus such as a digital camera having a wireless function, a portable media player, a so-called tablet device, a personal computer, a smartphone, and the like.

The mobile phone 200 has a control unit 201. The control unit 201 controls each unit of the mobile phone 200 in accordance with an input signal and a program described below. It should be noted that, instead of the control unit 201 controlling the entire apparatus, a plurality of hardware components may control the entire apparatus by sharing the processing.

The mobile phone 200 has an image capturing unit 202. The image capturing unit 202 converts subject light formed as an image by a lens that is included in the image capturing unit 202 into an electrical signal, performs noise reduction processing and the like, and outputs digital data as image data. After the image data captured by the image capturing unit 202 is stored in a buffer memory, a predetermined calculation is performed by the control unit 201, and the image data is recorded in a recording medium 210.

The mobile phone 200 has a non-volatile memory 203. The non-volatile memory 203 is an electrically erasable and recordable non-volatile memory, and an OS (Operating System) that is basic software executed by the control unit 201, various programs, and the like are stored in the non-volatile memory 203. It is assumed that a program for communicating with the camera 100 is also held in the non-volatile memory 203, and is installed as a camera control application. It should be noted that processing of the mobile phone 200 in the present embodiment is realized by reading a program provided by the camera control application. It should be noted that it is assumed that the camera control application has a program for using the basic functions of the OS installed in the mobile phone 200 (for example a wireless LAN function, a Bluetooth function, a function for invoking other applications, and the like). In addition, the camera control application has a remote image capturing function that, while a live view image obtained from the camera 100 is viewed on the mobile phone 200, performs image capturing by remote operation of the camera 100 from the mobile phone 200. Furthermore, the camera control application has a function for remotely viewing image data recorded in a recording medium mounted on the camera 100, and a remote viewing function for receiving the image data. The camera control application executed by the control unit 201 is an example of an input unit that inputs, as an input image, a live view image obtained from the camera 100.

It should be noted that the OS of the mobile phone 200 may have a program for realizing processing in the present embodiment.

The mobile phone 200 has a work memory 204. The work memory 204 is used as a buffer memory that temporarily stores image data generated by the image capturing unit 202, an image display memory of a display unit 206, a work area of the control unit 201, and the like.

The mobile phone 200 has an operation unit 205. The operation unit 205 is used for receiving an instruction with respect to the mobile phone 200 from a user. The operation unit 205 includes, for example, operation members such as a power button for the user to instruct ON/OFF of a power supply of the mobile phone 200, a touch panel formed on the display unit 206, and the like.

The mobile phone 200 has a display unit 206. The display unit 206 performs display of image data, character display for interactive operation, and the like. It should be noted that the display unit 206 does not necessarily need to be built into the mobile phone 200. The mobile phone 200 can connect to the display unit 206, and the mobile phone 200 need only have at least a display control function for controlling display of the display unit 206. The display control function executed by the control unit 201 is an example of a display control unit.

The mobile phone 200 has a recording medium 210. The recording medium 210 can record image data output from the image capturing unit 202 and image data received from a data processing apparatus. The recording medium 210 may be configured so as to be attachable to and detachable from the mobile phone 200, or may be built into the mobile phone 200. That is, the mobile phone 200 need only have a unit for accessing at least the recording medium 210.

The mobile phone 200 has a connection unit 211. The connection unit 211 is an interface for connecting to an external apparatus. The mobile phone 200 of the present embodiment can perform exchange of data with the external apparatus via the connection unit 211. It should be noted that, in the present embodiment, the connection unit 211 includes an interface for communicating with the external apparatus via a wireless LAN. The control unit 201 realizes wireless communication with the external apparatus by controlling the connection unit 211. It should be noted that it is possible for the camera 100 in the present embodiment to operate as a client device in at least an infrastructure mode of wireless LAN communication, and to join a network formed by a peripheral AP. In addition, the camera 100 may operate as a simplified AP, and the mobile phone 200 may join the simplified AP of the camera 100.

The mobile phone 200 has a public network connection unit 212. The public network connection unit 212 is an interface used when performing public wireless communication. The mobile phone 200 can perform calls and data communication with other equipment via the public network connection unit 212. At the time of a call, the control unit 201 performs input of an audio signal and output of an audio signal via a microphone 213 and a speaker 214. In the present embodiment, it is assumed that the public network connection unit 212 includes an interface for performing communication using 3G (3rd Generation Mobile Communication System). It should be noted that a communication method is not limited to 3G, and other communication methods such as LTE, WiMAX, ADSL, FTTH, so-called 4G (4th Generation Mobile Communication System), and the like may be used. LTE is an abbreviation for Long Term Evolution. WiMAX is an abbreviation for Worldwide Interoperability for Microwave Access. ADSL is an abbreviation for Asymmetric Digital Subscriber Line. FTTH is an abbreviation for Fiber To The Home. In addition, the connection unit 211 and the public network connection unit 212 do not necessarily need to be configured as independent hardware, and, for example, it is also possible for the connection unit 211 and the public network connection unit 212 to be shared using a single antenna. The connection unit 211 and the public network connection unit 212 are an example of a communication unit for performing communication with the image capturing apparatus.

The above is the explanation of the mobile phone 200. In this context, in the following description, although there are cases in which description is provided as if the mobile phone 200 is a subject of processing, actually, the control unit 201 reads a program stored in the non-volatile memory 203 and realizes various types of processing. In addition, similarly, in portions in which the camera 100 is described as a subject of processing, the control unit 101 reads a program stored in the non-volatile memory 103 and realizes various types of processing.

### <Description of Screen of Camera Control Application of Mobile Phone 200>

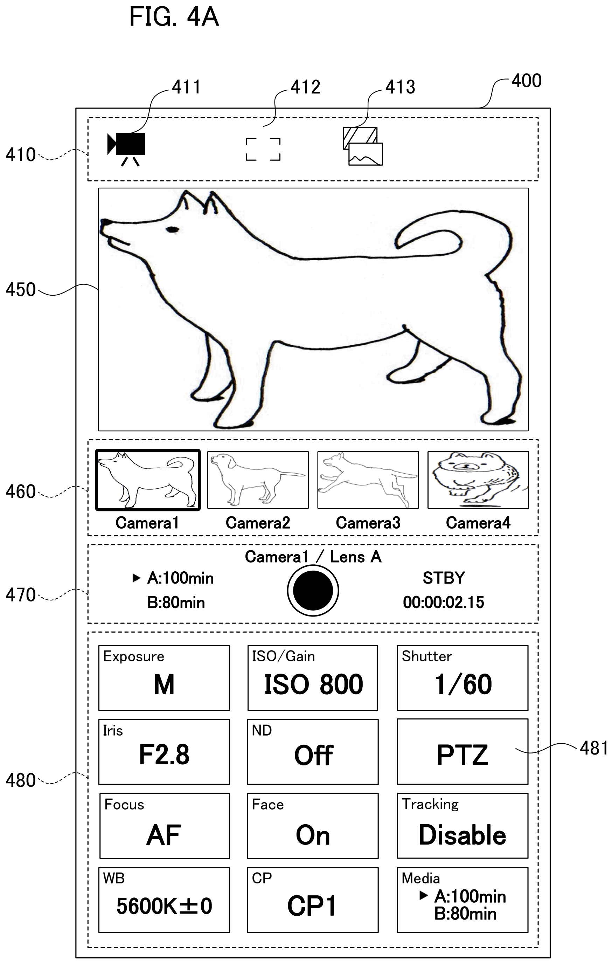

FIG. 4A and FIG. 4B, FIGS. 5A to 5D, and FIG. 6A and FIG. 6B are examples of screens of the camera control application displayed on the display unit 206 of the mobile phone 200. In this context, the camera control application connects a plurality of cameras simultaneously, and enables operation of each camera. In addition, the camera control application enables receiving a video being captured by the camera and current various settings of the camera by communication with the camera, and displaying the video and the settings on the camera control application screen. In addition, the camera control application is an example of a control unit that, after enlargement/reduction operation at the operation apparatus ends, controls the image capturing apparatus via the communication unit so that zoom magnification is changed according to enlargement/reduction magnification.

FIG. 4A is an example of a camera control application screen. In the example of the camera control application screen 400 of FIG. 4A, a video being captured and current various settings of the camera are received from a camera connected via communication, and are displayed on the screen.

An application setting region 410 is disposed in the camera control application screen 400. The application setting region 410 is a region in which setting buttons for changing various settings of the camera control application are disposed. In the example of the camera control application screen 400 of FIG. 4A, a camera connection setting button 411, a full screen display button 412, a marker setting button 413, and the like are disposed in the application setting region 410. In a case in which the user touch-presses the camera connection setting button 411, transition occurs to a screen for setting connection of the camera.

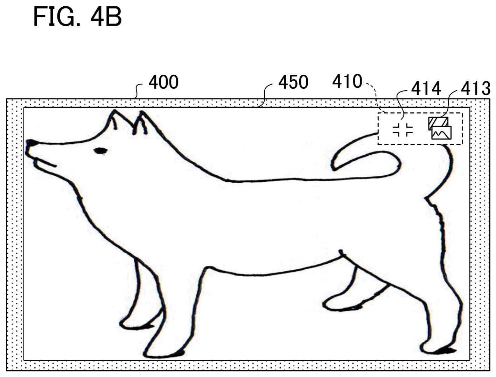

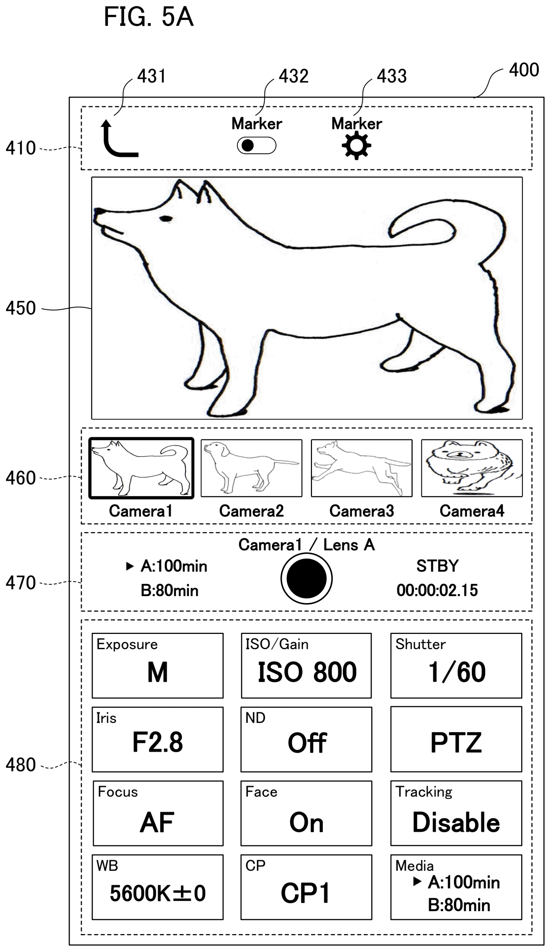

In a case in which the user touch-presses the full screen display button 412, the camera control application screen 400 displays the video of the camera displayed in the main video region 450 on a full screen, as shown in FIG. 4B. In a case in which the video of the camera is displayed on the full screen, the camera control application screen 400 displays the application setting region 410 by superimposing the application setting region 410 on the video of the camera, as shown in FIG. 4B. It should be noted that, as shown in FIG. 4B, an operation screen display button 414 and the marker setting button 413 are disposed in the application setting region 410 in a case in which the video of the camera is displayed on the full screen. In a case in which the user touch-presses the operation screen display button 414, the camera control application screen 400 transitions to the screen shown in FIG. 4A. In a case in which the user touch-presses the marker setting button 413, the camera control application screen 400 transitions to the screen shown in FIGS. 5A to 5D.

As shown in FIG. 4A, a main video region 450 and a sub video region 460 are disposed in the camera control application screen 400. The main video region 450 and the sub video region 460 are regions for displaying video received from a camera. In this example, the camera control application is connected to a plurality of cameras simultaneously, and the camera control application, in the sub video region 460, arranges video being captured by each camera side by side and displays the video. In addition, video of a camera to be controlled by the camera control application is displayed in the main video region 450.

As shown in FIG. 4A, a recording information region 470 is disposed in the camera control application screen 400. The recording information region 470 is a region for displaying recording information and a recording button of the camera to be controlled. For example, the recording information is a remaining media time of the camera to be controlled, a time code of the camera to be controlled, and the like. In addition, in a case in which the recording button is touch-pressed, the camera control application starts or stops recording of video being captured by the camera to be controlled.

As shown in FIG. 4A, an operation region 480 is disposed in the camera control application screen 400. The operation region 480 is a region in which operation buttons for operating the camera to be controlled are disposed. The operation buttons are, for example, buttons for operating exposure, shutter speed, zoom, focus, and the like of the camera to be controlled. In a case in which the user touch-presses an operation button, the camera control application screen 400 performs execution of an operation or display of an operation screen. In the operation region 480, for example, a PTZ operation button 481 that receives an instruction of screen display for performing a PTZ operation of the camera to be controlled is disposed. In addition, the user can display operation buttons disposed outside the region by performing a scroll operation on the operation region 480.

FIGS. 5A to 5D show an example of a camera control application screen related to display of a marker. A transition is made to the camera control application screen 400 shown in FIGS. 5A to 5D by the user touch-pressing the marker setting button 413 that is disposed in the application setting region 410 of FIG. 4A. In the example of the camera control application screen 400 of FIGS. 5A to 5D, a return button 431, a marker display switching button 432, a marker detail setting button 433, and the like are disposed in the application setting region 410. In a case in which the user touch-presses the return button 431, the camera control application screen 400 transitions to the screen shown in FIG. 4A.

In a case in which the user touch-presses the marker display switching button 432, the camera control application screen 400 switches between enabled/disabled display of a marker superimposed on the main video region 450. The marker display switching button 432 of FIG. 5A indicates that the display of the marker is invalid. In this case, as shown in FIG. 5A, the video of the camera to be controlled is displayed in the main video region 450 in a state in which the marker is not displayed superimposed. The camera control application is an example of a superimposing unit that superimposes, on the input image, a frame that specifies a subject included in the input image.

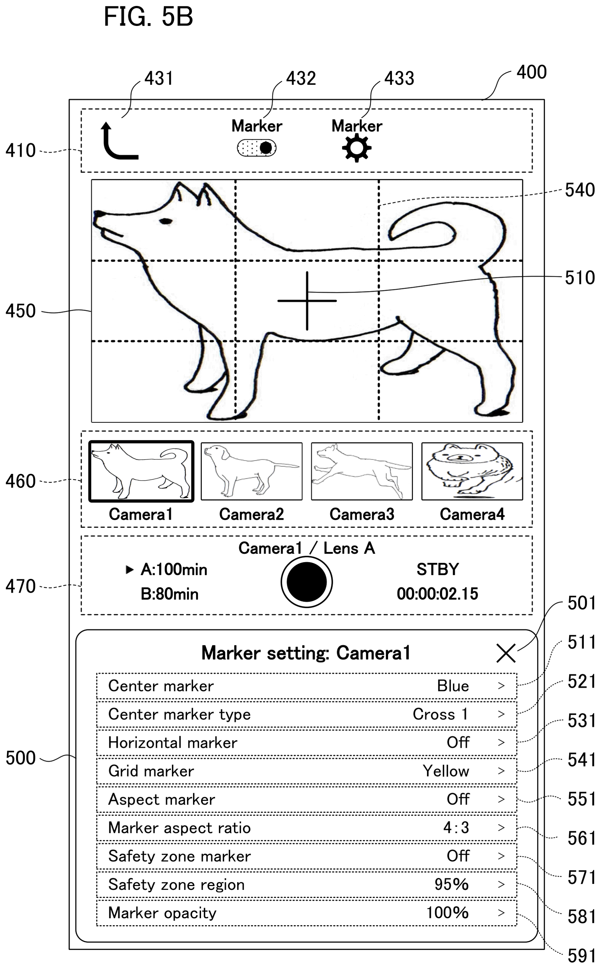

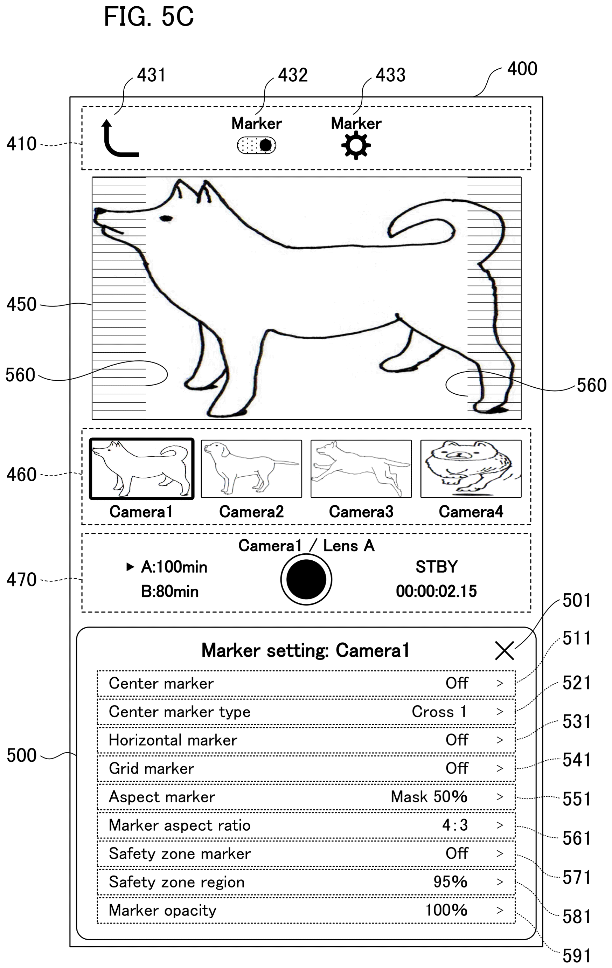

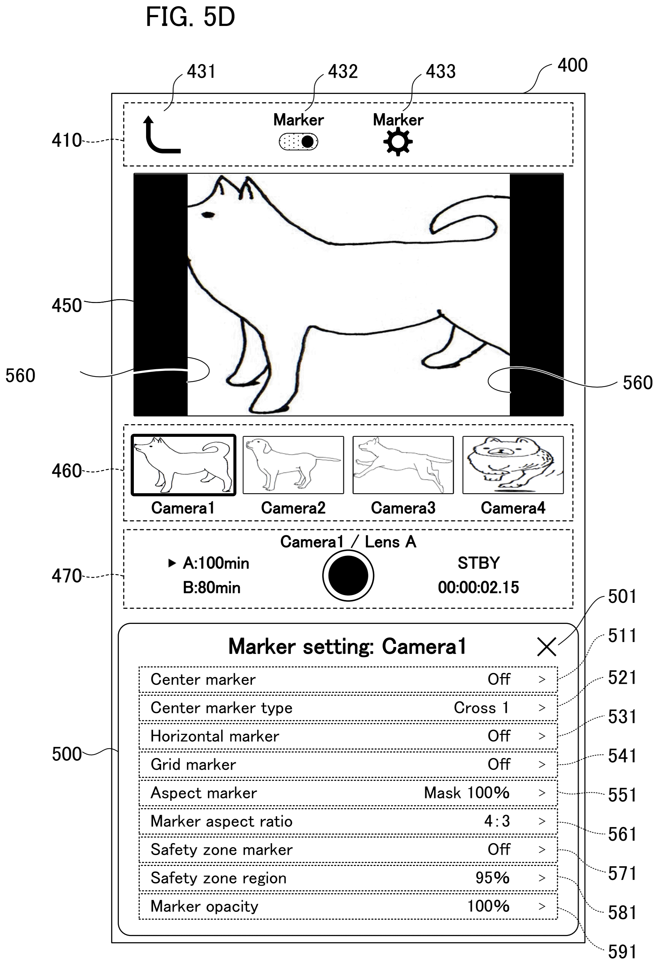

The marker display switching buttons 432 of FIG. 5B, FIG. 5C, and FIG. 5D indicate that the display of the marker is enabled. In this case, as shown in FIG. 5B, FIG. 5C, and FIG. 5D, the video of the camera to be controlled is displayed in the main video region 450 in a state in which the marker is displayed superimposed. A center marker 510 and a grid marker 540 are displayed in the main video region 450 of FIG. 5B. The 4:3 aspect marker 560 displays a mask having an opacity of 50% in the main video region 450 of FIG. 5C. The 4:3 aspect marker 560 displays a mask having an opacity of 100% in the main video region 450 of FIG. 5D.

In a case in which the user touch-presses the marker detail setting button 433, the camera control application screen 400 displays a marker detail setting screen 500 as shown in FIG. 5B, FIG. 5C, and FIG. 5D. The marker detail setting screen 500 is an example of a setting unit that sets a display form of a marker that is a superimposition member. A close button 501 and interfaces for setting display forms of various markers, such as a center marker setting 511, a grid marker setting 541, an aspect marker setting 551, and the like, are disposed in the marker detail setting screen 500. Interfaces for setting display forms of each marker, such as a center marker type setting 521, a horizontal marker setting 531, and a marker aspect ratio setting 561, are disposed in the marker detail setting screen 500. Interfaces for setting display forms of each marker, such as a safety zone marker setting 571, a safety zone region setting 581, a marker opacity setting 591, and the like, are disposed in the marker detail setting screen 500. In a case in which the user touch-presses the close button 501, the camera control application screen 400 hides the marker detail setting screen 500.

As shown in FIG. 5B, FIG. 5C, and FIG. 5D, in a case in which the marker display switching button 432 is enabled, the camera control application screen 400 displays the marker in the main video region 450 in accordance with the setting content of the marker detail setting screen 500.

In the marker detail setting screen 500 of FIG. 5B, the center marker setting 511 is set to blue, and the grid marker setting 541 is set to yellow. For this reason, the blue center marker 510 and the yellow grid marker 540 are displayed in the main video region 450 of FIG. 5B.

In the marker detail setting screen 500 of FIG. 5C, the aspect marker setting 551 is set to Mask 50%, and the marker aspect ratio setting 561 is set to 4:3. For this reason, the 4:3 aspect marker 560 is displayed using a mask of 50% opacity in the main video region 450 of FIG. 5C.

In the marker detail setting screen 500 of FIG. 5D, the aspect marker setting 551 is set to Mask 100%, and the marker aspect ratio setting 561 is set to 4:3. For this reason, the 4:3 aspect marker 560 is displayed using a mask of 100% opacity in the main video region 450 of FIG. 5D.

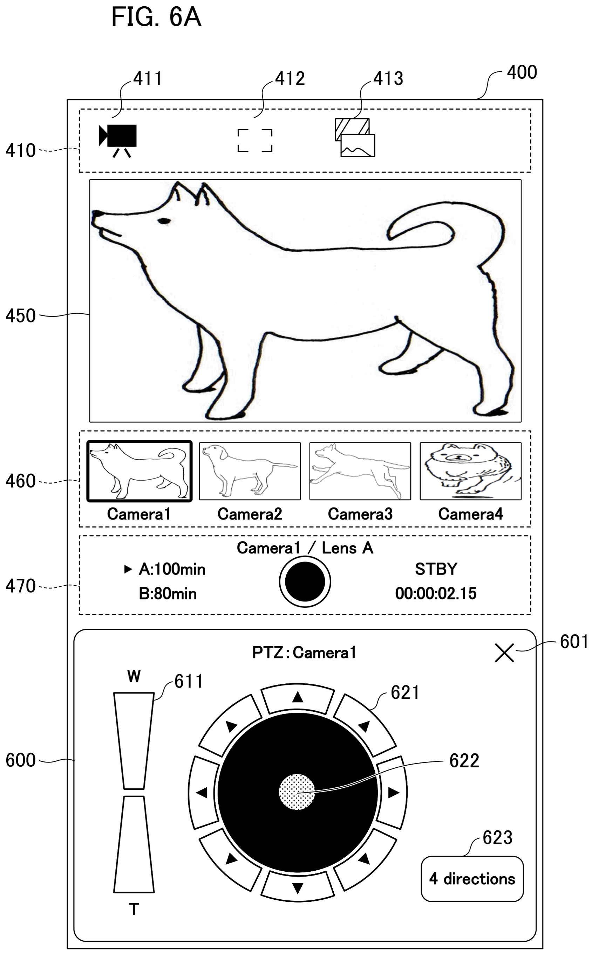

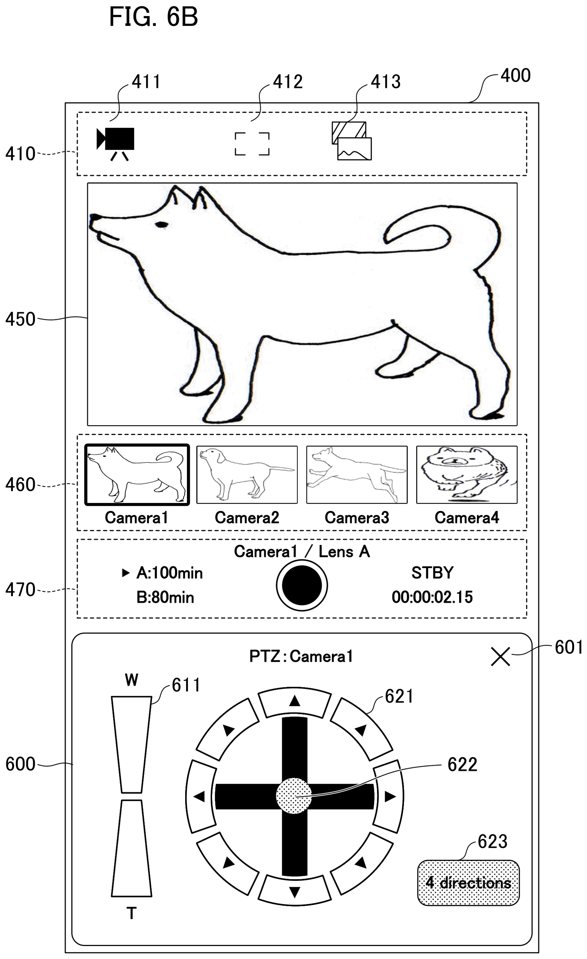

FIG. 6A and FIG. 6B are examples of a camera control application screen related to PTZ operation. In the camera control application screen 400 of FIG. 6A and the camera control application screen 400 of FIG. 6B, operation states associated with the direction restriction button 623 differ, as will be described in detail below. Transition occurs to the camera control application screen 400 shown in FIG. 6A and in FIG. 6B by the user touch-pressing the PTZ operation button 481 that is disposed in the operation region 480 of FIG. 4A.

A PTZ operation screen 600 is displayed in the camera control application screen 400 of FIG. 6A and FIG. 6B. A close button 601, a zoom operation button 611, a direction button 621, a joystick 622, the direction restriction button 623, and the like are disposed in the PTZ operation screen 600. In a case in which the user touch-presses the close button 601, the camera control application screen 400 hides the PTZ operation screen 600. The zoom operation button 611 is an example of an operation unit that receives an operation of enlargement/reduction.

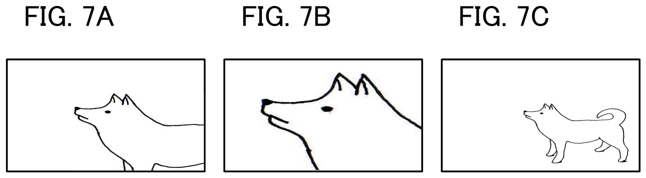

In a case in which the user touch-presses the zoom operation button 611, the camera control application changes the zoom magnification of the camera 100 that is the camera to be controlled. Specifically, the camera control application controls the zoom magnification of the camera 100 so as to zoom in in a case in which the zoom operation button 611 is touch-pressed in an upward direction, and zoom out in a case in which the zoom operation button 611 is touch-pressed in a downward direction. Furthermore, the camera control application displays the video after the change of the zoom magnification received from the camera 100 in the main video region 450 of the camera control application screen 400 and the sub video region 460 of the camera control application screen 400. For example, by zooming in using the camera 100, an angle of view of the video to be captured changes from FIG. 7A to FIG. 7B. In addition, for example, by zooming out using the camera 100, the angle of view of the video to be captured changes from FIG. 7A to FIG. 7C. It should be noted that, if an operation for changing the zoom magnification of the camera 100 can be performed, the operation is not limited to the operation using the zoom operation button 611. While the zoom operation button 611 is being touch-pressed in the camera control application, the mobile phone 200 transmits a change amount of the zoom magnification to the camera 100 at fixed intervals. The change amount of the zoom magnification may be a predetermined value, or may be a value set by the user.

In a case in which the user touch-presses the direction button 621, the camera control application changes the pan/tilt posture of the camera 100. In a case in which the touch-pressed direction button 621 indicates up, the camera control application adjusts the tilt of the camera 100 in an upward direction. In a case in which the touch-pressed direction button 621 indicates down, the camera control application adjusts the tilt of the camera 100 in a downward direction. In a case in which the touch-pressed direction button 621 indicates left, the camera control application adjusts the pan of the camera 100 in a leftward direction. In a case in which the touch-pressed direction button 621 indicates right, the camera control application adjusts the pan of the camera 100 in a rightward direction. In a case in which the touch-pressed direction button 621 indicates upper right, the camera control application adjusts the pan of the camera 100 in a rightward direction and adjusts the tilt of the camera 100 in an upward direction. In a case in which the touch-pressed direction button 621 indicates lower right, the camera control application adjusts the pan of the camera 100 in a rightward direction and adjusts the tilt of the camera 100 in a downward direction. In a case in which the touch-pressed direction button 621 indicates lower left, the camera control application adjusts the pan of the camera 100 in a leftward direction and adjusts the tilt of the camera 100 in a downward direction. In a case in which the touch-pressed direction button 621 indicates upper left, the camera control application adjusts the pan of the camera 100 in a leftward direction and adjusts the tilt of the camera 100 in an upward direction. While the direction button 621 is being touch-pressed in the camera control application, the mobile phone 200 transmits a movement amount of the pan and a movement amount of the tilt to the camera 100 at fixed intervals. The movement amount of the pan and the movement amount of the tilt may be predetermined values, or may be values set by the user.

The joystick 622 is an interface for inputting a direction and a displacement amount from a reference position by a swipe operation in which the center is the reference position. Directions operable by the joystick 622 of FIG. 6A are 360 degrees. In this case, as shown in FIG. 6A, a background of the joystick 622 clearly indicates that the operable direction is 360 degrees by coloring all directions of 360 degrees. In addition, directions operable by the joystick 622 of FIG. 6B are four directions of up, down, left, and right. In this case, as shown in FIG. 6B, the background of the joystick 622 clearly indicates that the operable directions are the four directions of up, down, left, and right by coloring the four directions of up, down, left, and right. The directions operable by the joystick 622 are switched by the user touch-pressing the direction restriction button 623. In a case in which the direction operable by the joystick 622 is 360 degrees, the camera control application screen 400 displays the direction restriction button 623 shown in FIG. 6A. In a case in which the directions operable by the joystick 622 are the four directions of up, down, left, and right, the camera control application screen 400 displays the direction restriction button 623 shown in FIG. 6B.

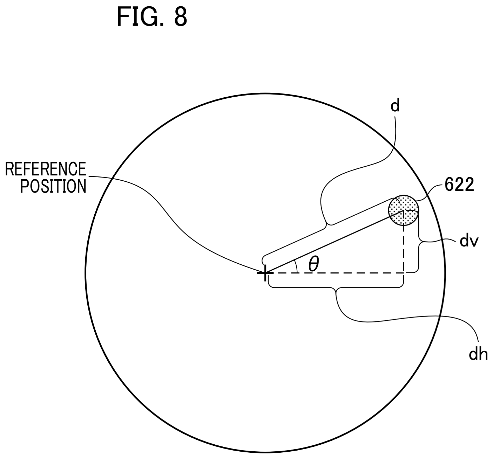

In a case in which the user performs a swipe operation on the joystick 622, the camera control application determines a horizontal displacement amount dh and a vertical displacement amount dv based on an input direction θ and a displacement amount d, as shown in FIG. 8. The direction θ is an angle of the joystick 622 in a case in which the reference position is the center, and has a value range of equal to or greater than 0 degrees and less than 360 degrees (equal to or greater than 0 rad and less than 2π rad). It should be noted that, in a case in which the directions operable by the joystick 622 are the four directions of up, down, left, and right, the direction θ is limited to 0 degrees, 90 degrees, 180 degrees, and 270 degrees (0 rad, π/2 rad, π rad, and 3π/2 rad). The horizontal displacement amount dh is calculated by d × cosθ. In addition, the vertical displacement amount dv is calculated by d × sinθ.

In a case in which the horizontal displacement amount dh is a positive value, the camera control application adjusts the pan of the camera 100 in a rightward direction at a speed according to the absolute value of the horizontal displacement amount dh. In a case in which the horizontal displacement amount dh is a negative value, the camera control application adjusts the pan of the camera 100 in a leftward direction at a speed according to the absolute value of the horizontal displacement amount dh. In a case in which the vertical displacement amount dv is a positive value, the camera control application adjusts the tilt of the camera 100 in an upward direction at a speed according to the absolute value of the vertical displacement amount dv. In a case in which the vertical displacement amount dv is a negative value, the camera control application adjusts the tilt of the camera 100 in a downward direction at a speed according to the absolute value of the vertical displacement amount dv.

It should be noted that, if the horizontal displacement amount of the joystick 622 and the vertical displacement amount of the joystick 622 can be acquired from the reference position, the calculation method is not limited thereto. While the swipe operation is being performed on the joystick 622 in the camera control application, the mobile phone 200 transmits the movement amount of the pan and the movement amount of the tilt to the camera 100 at fixed intervals. The movement amount of the pan is a value obtained by multiplying the horizontal displacement amount by a predetermined coefficient. The movement amount of the tilt is a value that is the vertical displacement amount multiplied by a predetermined coefficient. In this context, the predetermined coefficient may be a predetermined value, or may be a value set by the user. It should be noted that, if the movement amount of the pan and the movement amount of the tilt can be determined based on the operation of the joystick 622, the calculation method is not limited thereto.

### <Explanation of Zoom Operation by Pinch Operation>

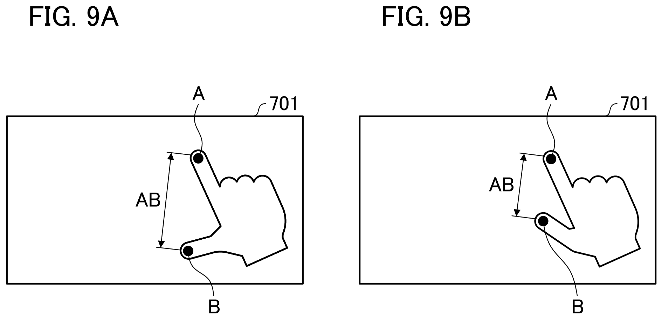

An explanation will be provided with respect to an example of a zoom operation by a pinch operation in the camera control application of the mobile phone 200 with reference to FIG. 9A to FIG. 13H. This pinch operation is an example of an operation unit that receives an operation of enlargement/reduction.

FIG. 9A and FIG. 9B are diagrams for explaining the pinch operation. In FIG. 9A and FIG. 9B, contact point A and contact point B are points at which fingers are in contact on a touch panel 701. In addition, in FIG. 9A and FIG. 9B, a distance AB indicates a distance between contact point A and contact point B on the touch panel 701. The distance AB of FIG. 9A is longer than the distance AB of FIG. 9B. A pinch-in is an operation of moving so as to narrow the fingers on the touch panel 701 so as to transition from FIG. 9A to FIG. 9B. A pinch-out is an operation of moving so as to widen the fingers on the touch panel 701 so as to transition from FIG. 9B to FIG. 9A.

In a case in which the zoom magnification of the camera 100 is changed by the pinch operation on the mobile phone 200, the camera control application performs processing as described below. The camera control application determines a zoom magnification based on a ratio of the distance AB of FIG. 9A to the distance AB of FIG. 9B, and the camera control application transmits the determined zoom magnification to the camera 100 via the network 112. In a case in which a pinch-in operation is performed so that the distance AB of FIG. 9B becomes 1/2 with respect to the distance AB of FIG. 9A, the camera control application controls the camera 100 so that the zoom magnification becomes 1/2. In a case in which a pinch-out operation is performed so that the distance AB of FIG. 9A doubles with respect to the distance AB of FIG. 9B, the camera control application controls the camera 100 so that the zoom magnification doubles. The zoom magnification is an example of an enlargement/reduction magnification that indicates an enlargement magnification in a case in which the zoom magnification is greater than 1, and indicates a reduction magnification in a case in which the zoom magnification is less than 1.

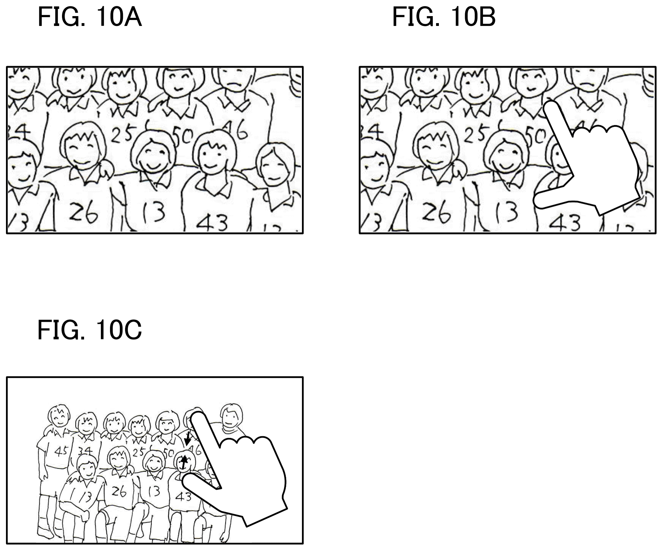

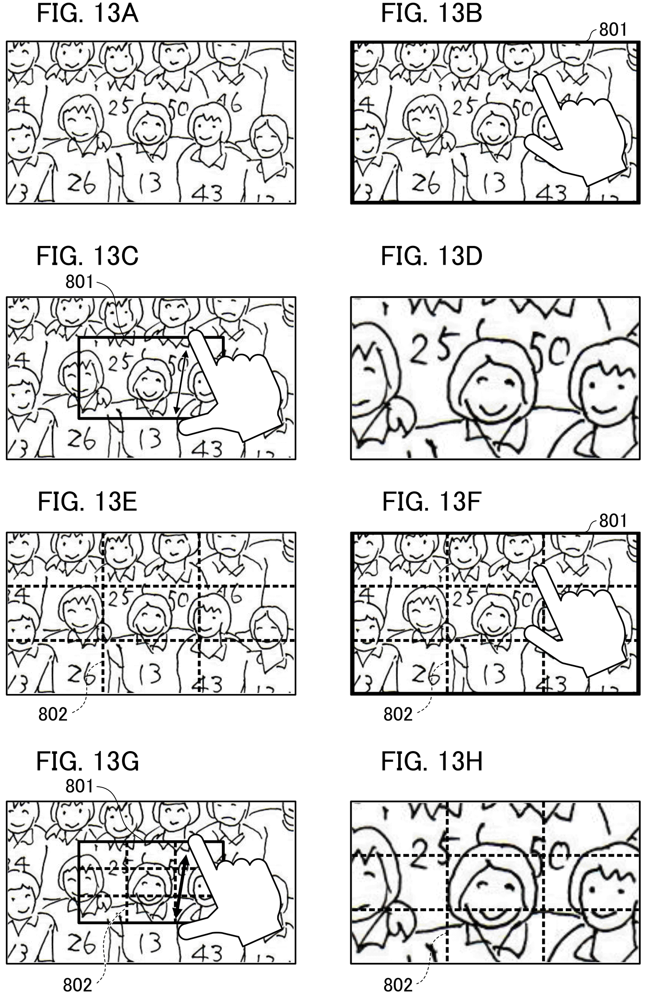

An explanation will be provided with respect to a specific example of the zoom operation by the pinch operation with reference to FIGS. 10A to 10C, and FIGS. 13A to 13H. FIGS. 10A to 10C, and FIGS. 13A to 13H are display examples at the time of the pinch operation in the main video region 450 of the camera control application screen 400 of FIG. 4A to FIG. 6B. The main video region 450 is displayed on the display unit 206 of the mobile phone 200 on which the touch panel is formed, and a touch operation is possible.

An explanation will be provided with respect to a specific example in a case in which the zoom magnification of the camera 100 is changed in response to a pinch-in operation with reference to FIG. 10A to FIG. 10C. As shown in FIG. 10A, the video of the camera 100 is displayed in the main video region 450 of the camera control application screen 400. The camera control application follows a pinch operation on the main video region 450, and changes the zoom magnification of the camera 100. FIG. 10C shows an example in which a distance between fingers in contact by the pinch operation becomes 1/2 with respect to FIG. 10B. Accordingly, the zoom magnification of the video of the camera 100 shown in FIG. 10C becomes 1/2 with respect to the zoom magnification of the video of the camera 100 shown in FIG. 10B.

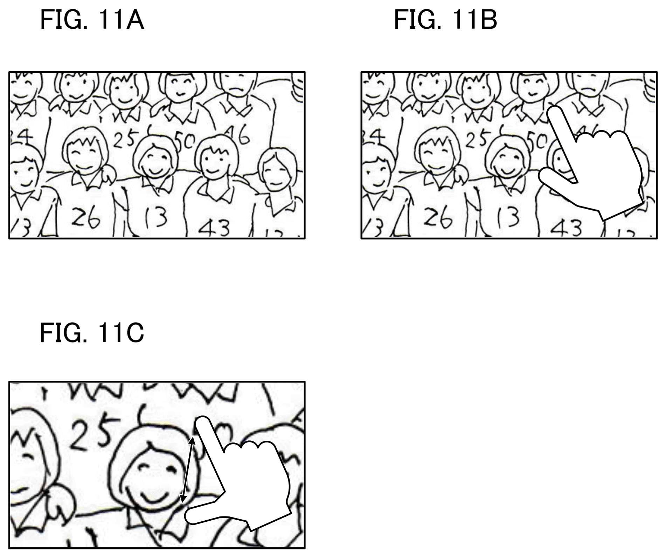

An explanation will be provided with respect to a specific example in a case in which the zoom magnification of the camera 100 is changed in response to a pinch-out operation with reference to FIG. 11A to FIG. 11C. As shown in FIG. 11A, the video of the camera 100 is displayed in the main video region 450 of the camera control application screen 400. The camera control application follows a pinch operation on the main video region 450, and changes the zoom magnification of the camera 100. FIG. 11C shows an example in which a distance between fingers in contact by the pinch operation becomes twice with respect to FIG. 11B. Accordingly, the zoom magnification of the video of the camera 100 shown in FIG. 11C doubles with respect to the zoom magnification of the video of the camera 100 shown in FIG. 11B.

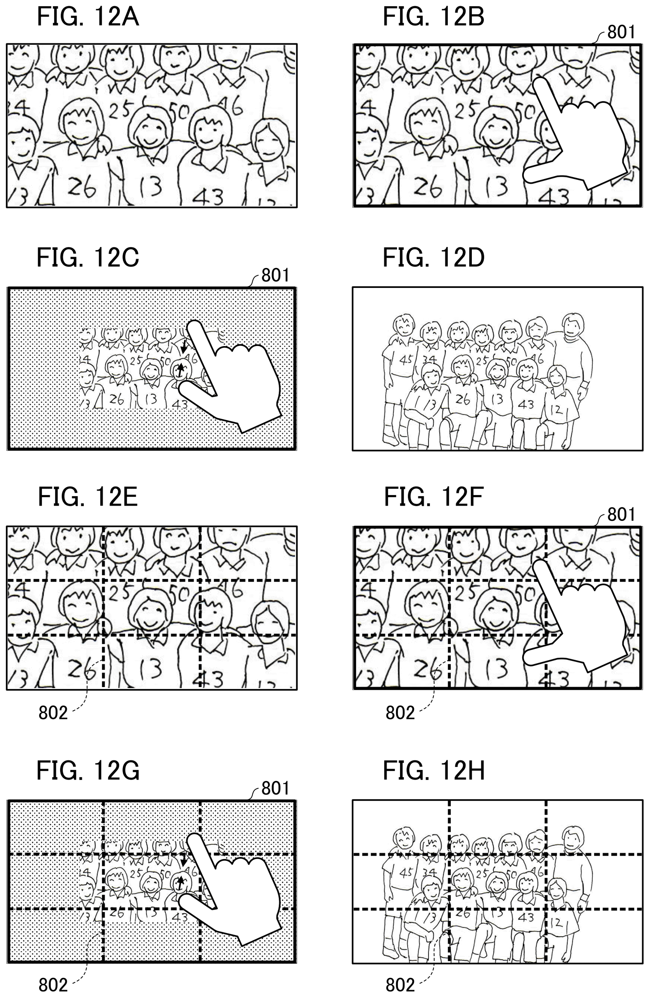

An explanation will be provided with respect to a specific example in a case in which an angle of view of the video of the camera 100 after the change of the zoom magnification is adjusted by a pinch-in operation by referring to FIG. 12A to FIG. 12H. An angle of view frame 801 of FIG. 12B, FIG. 12C, FIG. 12F, and FIG. 12G is a frame indicating the angle of view of the video of the camera 100 after the change of the zoom magnification. A marker 802 of FIG. 12E, FIG. 12F, FIG. 12G, and FIG. 12H is a superimposition member displayed in superimposition on the video of the camera 100 in accordance with the video in order to confirm the angle of view. In the example of FIG. 12E, FIG. 12F, FIG. 12G, and FIG. 12H, a grid marker is displayed as the marker 802. It should be noted that the marker 802 need only be an element displayed superimposed on the video in accordance with the video, and may be another marker such as a center marker, an aspect marker, and the like, as shown in FIG. 5B, FIG. 5C, and FIG. 5D, or may be an autofocus frame. The marker 802 is an example of a superimposition member displayed superimposed on an input image. The display unit 206 is an example of a display device capable of displaying an input image and a superimposition member displayed superimposed on the input image in the main video region 450 serving as a first region.

FIG. 12A is an example in which the video of the camera 100 is displayed in the main video region 450 of the camera control application screen 400. FIG. 12E is an example in which the marker 802 is displayed superimposed in the state shown in FIG. 12A. As shown in FIG. 12E, the marker 802 is displayed superimposed on the video of the camera 100 in accordance with the video.

FIG. 12B is an example of a case in which a pinch operation is started on the video of FIG. 12A. As shown in FIG. 12B, by starting the pinch operation, the angle of view frame 801 is displayed on the video of the camera 100 in accordance with the video. FIG. 12F is an example in which the marker 802 is displayed superimposed in the state shown in FIG. 12B.

FIG. 12C is an example of a case in which a pinch-in operation is performed from the state shown in FIG. 12B. The camera control application determines a zoom magnification of the camera 100 based on the pinch operation on the main video region 450, and displays the video of the camera 100 in the center of the main video region 450 by reducing the video based on the determined zoom magnification as shown in FIG. 12C. In FIG. 12C, the color of a region in which the video is not displayed (background region) desirably differs from the color of the marker 802 so that the marker 802 becomes easily visually recognized. FIG. 12G is an example in which the marker 802 is displayed superimposed in the state shown in FIG. 12C. In FIG. 12G, the angle of view frame 801 indicates the angle of view of the video of the camera 100 after the change of the zoom magnification. For this reason, as shown in FIG. 12G, the marker 802 is not reduced by the pinch-in operation.

FIG. 12C shows an example in which, with respect to FIG. 12B, a distance between fingers in contact by the pinch operation becomes 1/2. Accordingly, the zoom magnification by the pinch operation in FIG. 12C becomes 1/2 of the zoom magnification in FIG. 12B. For this reason, a size (a vertical size and a horizontal size) of the video of FIG. 12C becomes 1/2 of the video of FIG. 12B. The camera control application changes the zoom magnification of the camera 100 at the time of ending the pinch operation. In a case in which the pinch operation is ended in the state of FIG. 12C, the zoom magnification of the camera 100 is changed to 1/2, and the video captured by the camera 100 becomes the angle of view shown in FIG. 12D. FIG. 12H is an example in which the marker 802 is displayed superimposed in the state shown in FIG. 12D. As shown in FIG. 12G and FIG. 12H, the marker 802 is displayed at substantially the same position with respect to a subject of the video.

An explanation will be provided of a specific example of a case in which the angle of view of the video of the camera 100 after the change of the zoom magnification is adjusted by a pinch-out operation by referring to FIG. 13A to FIG. 13H.

The angle of view frame 801 of FIG. 13B, FIG. 13C, FIG. 13F, and FIG. 13G is a frame indicating the angle of view of the video of the camera 100 after the change of the zoom magnification. The marker 802 of FIG. 13E, FIG. 13F, FIG. 13G, and FIG. 13H is a superimposition member displayed superimposed on the video of the camera 100 in accordance with the video in order to confirm the angle of view. In the example of FIG. 13E, FIG. 13F, FIG. 13G, and FIG. 13H, a grid marker is displayed as the marker 802. It should be noted that the marker 802 need only be an element displayed superimposed on the video in accordance with the video, and may be another marker such as a center marker, an aspect marker, and the like as shown in FIG. 5B, FIG. 5C, or FIG. 5D, or may be an autofocus frame.

FIG. 13A is an example in which the video of the camera 100 is displayed in the main video region 450 of the camera control application screen 400. FIG. 13E is an example in which the marker 802 is displayed superimposed in the state shown in FIG. 13A. As shown in FIG. 13E, the marker 802 is displayed superimposed on the video of the camera 100 in accordance with the video.

FIG. 13B is an example of a case in which a pinch operation is started on the video of FIG. 13A. As shown in FIG. 13B, by the start of the pinch operation, the angle of view frame 801 is displayed on the video of the camera 100 in accordance with the video. FIG. 13F is an example in which the marker 802 is displayed superimposed in the state shown in FIG. 13B.

FIG. 13C is an example of a case in which a pinch-out operation is performed from the state shown in FIG. 13B. The camera control application determines a zoom magnification of the camera 100 based on the pinch operation on the main video region 450, and, as shown in FIG. 13C, based on the determined zoom magnification, the camera control application reduces the angle of view frame 801 and displays the angle of view frame 801 superimposed at the center of the video of the camera 100. FIG. 13G is an example in which the marker 802 is displayed superimposed in the state shown in FIG. 13C. In FIG. 13G, the angle of view frame 801 indicates the angle of view of the video of the camera 100 after the change of the zoom magnification. For this reason, as shown in FIG. 13G, the marker 802 is reduced in accordance with the angle-of-view frame 801.

FIG. 13C shows an example in which, with respect to FIG. 13B, a distance between fingers in contact by the pinch operation doubles. Accordingly, the zoom magnification by the pinch operation in FIG. 13C becomes twice the zoom magnification in FIG. 13B. For this reason, a size (a vertical size and a horizontal size) of the angle of view frame 801 of FIG. 13C becomes a reciprocal of 2 (1/2) with respect to the angle of view frame 801 of FIG. 13B. The camera control application changes the zoom magnification of the camera 100 at the time of ending the pinch operation. In a case in which the pinch operation is ended in the state of FIG. 13C, the zoom magnification of the camera 100 doubles, and the video captured by the camera 100 becomes the angle of view shown in FIG. 13D. FIG. 13H is an example in which the marker 802 is displayed superimposed in the state shown in FIG. 13D. As shown in FIG. 13G and FIG. 13H, the marker 802 is displayed at substantially the same position with respect to a subject of the video.

### <Explanation of Zoom Angle of View Adjustment Processing Flow by Pinch Operation>

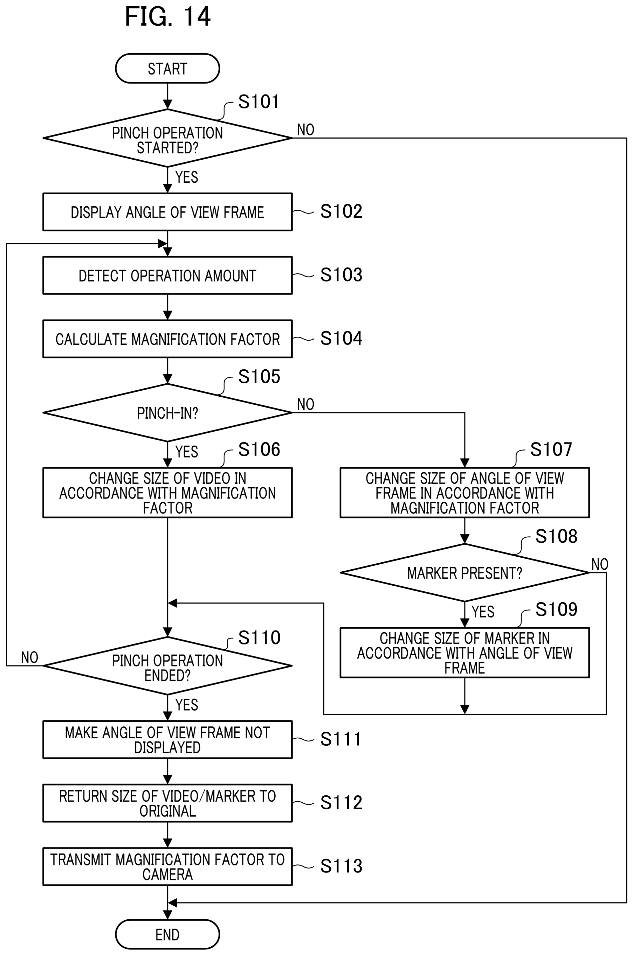

FIG. 14 is a flowchart in the mobile phone 200 of zoom angle of view adjustment processing by a pinch operation. The flowchart of FIG. 14 is realized by the control unit 201 loading the program recorded in the non-volatile memory 203 into the work memory 204 and executing the program. Together with the above-described drawings, an explanation will be provided with respect to the flow of FIG. 14.

In step S101, the control unit 201 determines whether or not a pinch operation has been started based on whether or not a pinch operation such as that shown in FIG. 9A and FIG. 9B is detected at the operation unit 205. In a case in which the control unit 201 determines that the pinch operation has been started by detecting the pinch operation, processing of step S102 is executed. In a case in which the control unit 201 determines that the pinch operation has not been started by not detecting the pinch operation, the flow of FIG. 14 is ended.

In step S102, the control unit 201 displays the angle of view frame 801 in accordance with the video region (in the example of FIG. 4A to FIG. 6B, the main video region 450) displayed on the display unit 206. In a case in which video is displayed in the video region as shown in FIG. 12A, the control unit 201 displays the angle of view frame 801 as shown in FIG. 12B. In a case in which video is displayed in the video region as shown in FIG. 12E, the control unit 201 displays the angle of view frame 801 as shown in FIG. 12F. In a case in which video is displayed in the video region as shown in FIG. 13A, the control unit 201 displays the angle of view frame 801 as shown in FIG. 13B. In a case in which video is displayed in the video region as shown in FIG. 13E, the control unit 201 displays the angle of view frame 801 as shown in FIG. 13F. It should be noted that the angle of view frame 801 may be displayed before starting the pinch operation.

In step S103, the control unit 201 detects an operation amount of the pinch operation in the operation unit 205. In the case shown in FIG. 9A and FIG. 9B, the control unit 201 calculates a change amount of the distance AB between contact points of the fingers from the start of the pinch operation as the operation amount. In a case in which the distance AB becomes 1/2 by causing a change from FIG. 9A to FIG. 9B by the pinch operation, the operation amount of the pinch operation becomes 1/2. In addition, in a case in which the distance AB doubles by causing a change from FIG. 9B to FIG. 9A by the pinch operation, the operation amount of the pinch operation doubles.

In step S104, the control unit 201 calculates the zoom magnification of the camera 100 from the operation amount of the pinch operation detected in step S103. Specifically, in a case in which the operation amount of the pinch operation is 1/2, the control unit 201 sets the zoom magnification to 1/2, and in a case in which the operation amount of the pinch operation is twice, the control unit 201 sets the zoom magnification to twice.

In step S105, the control unit 201 determines whether the pinch operation detected by the operation unit 205 is a pinch-in or a pinch-out. In a case in which the control unit 201 determines that the pinch operation is a pinch-in, processing of step S106 is executed. In a case in which the control unit 201 determines that the pinch operation is not a pinch-in, that is, is a pinch-out, processing of step S107 is executed. The pinch-in operation is a gesture operation of narrowing two fingers on the touch panel so as to change from FIG. 9A to FIG. 9B. In addition, the pinch-out operation is a gesture operation of widening two fingers on the touch panel so as to change from FIG. 9B to FIG. 9A. Furthermore, as explained in the processing of step S103 and the processing of step S104, the zoom magnification also increases or decreases as the operation amount of the pinch operation increases or decreases. For this reason, the control unit 201 determines that the operation is a pinch-in in a case in which the zoom magnification is less than 1, and determines that the operation is a pinch-out in a case in which the zoom magnification is greater than 1.

In step S106, the control unit 201 changes the size of the video of the camera 100 displayed in the video region based on the zoom magnification calculated in step S104, and the control unit 201 disposes the video in the center of the video region. Specifically, in a case in which the zoom magnification calculated in step S 104 is 1/2, the control unit 201 reduces the size (vertical and horizontal sizes) of the video of the camera 100 displayed in the video region to 1/2. By setting the zoom magnification to 1/2, the size of the video displayed in the video region changes from FIG. 12B to FIG. 12C. In a case in which the marker 802 is displayed in the video region, by setting the zoom magnification to 1/2, the size of the video displayed in the video region changes from FIG. 12F to FIG. 12G. As shown in FIG. 12G, in a case in which the marker 802 is displayed in the video region, even if the size of the video is changed, the size of the marker 802 is not changed.

In step S107, the control unit 201 changes the size of the angle of view frame 801 based on the zoom magnification calculated in step S104, and the control unit 201 disposes the angle of view frame 801 in the center of the video region. Specifically, in a case in which the zoom magnification calculated in step S104 is twice, the control unit 201 reduces the angle of view frame 801 so that a vertical size and a horizontal size of the angle of view frame 801 each become a reciprocal (1/2) of the zoom magnification. By doubling the zoom magnification, the size of the angle of view frame 801 displayed in the video region changes from FIG. 13B to FIG. 13C.

In step S108, the control unit 201 determines whether or not the marker 802 is displayed in accordance with the video. In a case in which the control unit 201 determines that the marker 802 is displayed, processing of step S109 is executed. In a case in which the control unit 201 determines that the marker 802 is not displayed, processing of step S110 is executed.

In step S109, the control unit 201 changes the size of the marker 802 in accordance with the angle-of-view frame 801 having the size thereof changed in step S107. As shown in FIG. 13F, in a case in which the marker 802 is displayed, as shown in FIG. 13G, the marker 802 is reduced in accordance with the angle-of-view frame 801.

In step S110, the control unit 201 determines whether or not the pinch operation in the operation unit 205 has ended. In a case in which the control unit 201 determines that the pinch operation has ended, processing of step S111 is executed. In a case in which the control unit 201 determines that the pinch operation has not ended, the processing is continued by returning to step S103.

In step S111, the control unit 201 hides the angle of view frame 801 displayed in step S102.

In step S112, in a case in which the size of the video was changed in step S106, the control unit 201 returns the video to the size before the pinch operation, and the control unit 201 displays the video on the display unit 206. Specifically, in a case in which the video is displayed reduced as shown in FIG. 12C, the size of the video is returned to the state before the pinch operation as shown in FIG. 12A. Furthermore, in step S112, in a case in which the size of the marker 802 was changed in step S109, the control unit 201 returns the marker 802 to the state before the pinch operation, and the control unit 201 displays the marker 802 in the video region. Specifically, in a case in which the marker 802 is reduced as shown in FIG. 13G, the size of the marker 802 is returned to the state before the pinch operation as shown in FIG. 13E.

In step S113, the control unit 201 transmits the zoom magnification calculated in step S104 to the camera 100, and changes the zoom magnification of the camera 100. Furthermore, the control unit 201 receives video captured after the change of the zoom magnification from the camera 100, and displays the video on the display unit 206. In a case in which the zoom magnification of the camera 100 is changed by the pinch-in operation, the video captured by the camera 100 changes as shown in FIG. 12A to FIG. 12D. In a case in which the zoom magnification of the camera 100 is changed by the pinch-in operation in a state in which the marker 802 is displayed in the video region, the video captured by the camera 100 changes as shown in FIG. 12E to FIG. 12H. In a case in which the zoom magnification of the camera 100 is changed by the pinch-out operation, the video captured by the camera 100 changes as shown in FIG. 13A to FIG. 13D. In a case in which the zoom magnification of the camera 100 is changed by the pinch-out operation in a state in which the marker 802 is displayed in the video region, the video captured by the camera 100 changes as shown in FIG. 13E to FIG. 13H.

Although an explanation was provided with respect to an example of adjusting the angle of view of the video of the camera after zooming by the pinch operation in the flowchart of FIG. 14, the present disclosure is not limited thereto. For example, in the present disclosure, the angle of view of the video of the camera after zooming may be adjusted by touch-pressing the zoom operation button 611 of FIG. 6A and the zoom operation button 611 of FIG. 6B.

As explained above, in the display control apparatus of the First Embodiment, since the angle of view of the video of the camera after zooming is adjusted by the pinch operation, zoom control by the pinch operation can be made to appear to have good followability. Furthermore, in the display control apparatus of the First Embodiment, since the marker is displayed in accordance with the angle of view of the video, the marker can be displayed at an appropriate position even while the angle of view of the video is being adjusted. Furthermore, in the display control apparatus of the First Embodiment, by setting the color of the background image displayed when reducing the video to a color different from the color of the marker, a reduction in visibility of the marker displayed in superimposition can be suppressed. That is, it is desirable that the color of the background image is a color not included in the marker that is a superimposition member.

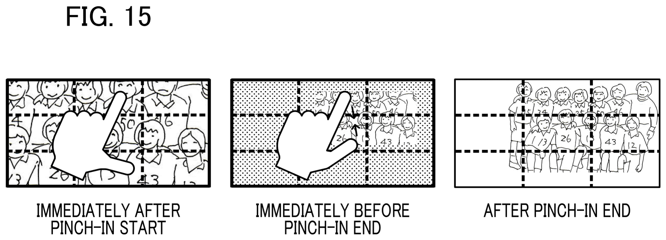

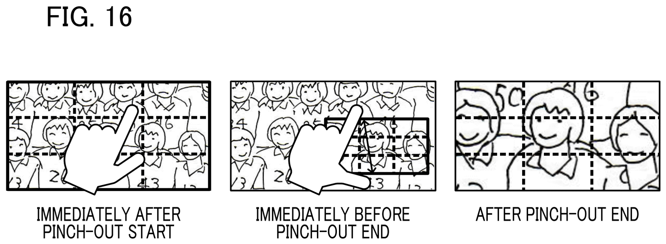

Although an example of adjusting an angle of view of a video of the camera after zooming by a pinch operation was explained with respect to the First Embodiment, an angle of view of a video of the camera after performing pan-tilt-zoom may be adjusted. In a case of a pinch-in operation, for example, as shown in FIG. 15, the video of the camera is reduced at a position based on the pinch-in position, and pan-tilt-zoom of the camera may be controlled so that the video of the camera is reduced at the position. In this case, as explained in the First Embodiment, the marker is not reduced. It should be noted that the position at which the video of the camera is reduced may be changed while the pinch-in operation is performed. In addition, in a case of a pinch-out operation, for example, as shown in FIG. 16, the angle of view frame is reduced at a position based on the pinch-out position, and pan-tilt-zoom of the camera may be controlled so that the video of the camera in the angle of view frame is enlarged. In this case, as explained in the First Embodiment, the marker is reduced in accordance with the angle of view frame. It should be noted that the position at which the angle of view frame is reduced may be changed while the pinch-out operation is performed.

### <Second Embodiment>

An explanation will be provided with respect to a Second Embodiment of the present disclosure. In the Second Embodiment, an explanation will be provided with respect to a case in which the angle of view frame is reduced by the pinch-in operation. Since the camera and the display control apparatus, as configuration elements of the present embodiment, are respectively similar to the camera and the display control apparatus in FIG. 1 to FIG. 3, explanation is omitted.

### <Explanation of Zoom Angle of View Adjustment Processing Flow by Pinch Operation>

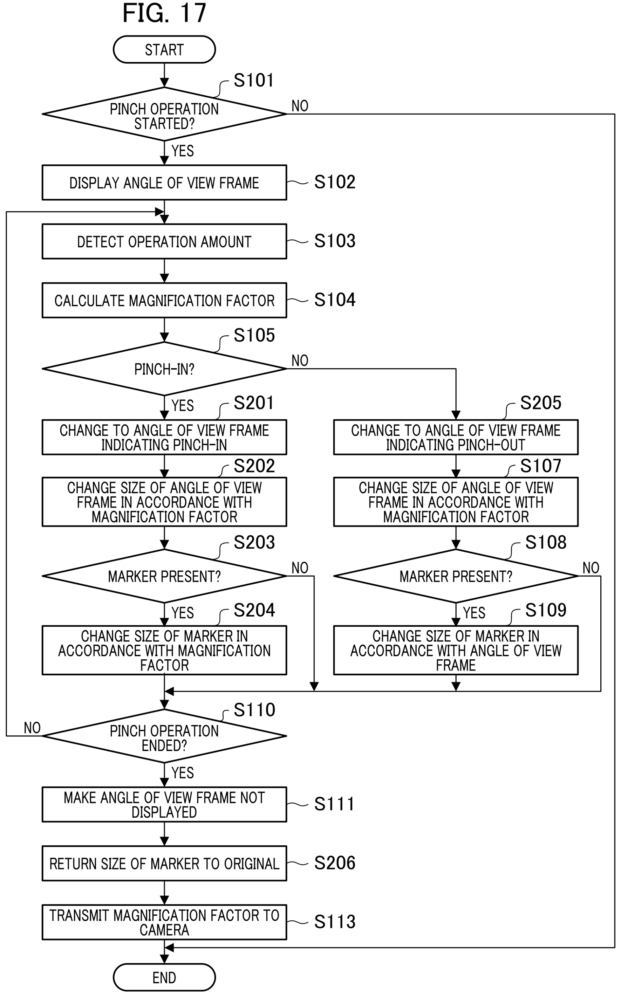

FIG. 17 is a flowchart of zoom angle of view adjustment processing by a pinch operation in the mobile phone 200 according to the Second Embodiment of the present disclosure. The flowchart of FIG. 17 is realized by the control unit 201 loading the program recorded in the non-volatile memory 203 into the work memory 204 and executing the program. Among steps of the flowchart of FIG. 17, with respect to steps in which the same processing as steps of the flowchart of FIG. 14 is performed, explanation is omitted by assigning the same reference numerals as the reference numerals in FIG. 14.

In step S105, the control unit 201 determines whether the pinch operation detected by the operation unit 205 is a pinch-in or is a pinch-out. In a case in which the control unit 201 determines that the pinch operation is a pinch-in, processing of step S201 is executed. In a case in which the control unit 201 determines that the pinch operation is not a pinch-in, that is, is a pinch-out, processing of step S205 is executed.

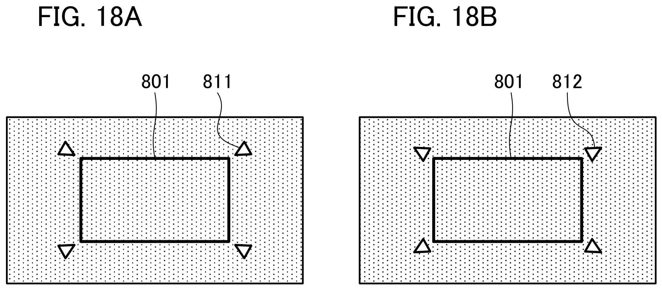

In step S201, the control unit 201 changes the angle of view frame 801 displayed in step S102 to an angle of view frame indicating a pinch-in. Specifically, as shown in FIG. 18A, an inward arrow 811 is displayed near the angle of view frame 801. A combination of the arrow 811 and the angle of view frame 801 is an example of the angle of view frame indicating a pinch-in. The angle of view frame indicating a pinch-in need only be distinguishable from an angle of view frame indicating a pinch-out, and is not limited to a display form such as the display form in FIG. 18A.

In step S202, the control unit 201 changes the size of the angle of view frame 801 based on the zoom magnification calculated in step S104, and the control unit 201 disposes the angle of view frame 801 in the center of the video region. Specifically, in a case in which the zoom magnification calculated in step S104 is 1/2, the control unit 201 reduces the angle of view frame 801 so that the size (vertical size and horizontal size) of the angle of view frame 801 becomes 1/2. By setting the zoom magnification to 1/2, the size of the angle of view frame 801 displayed in the video region changes from FIG. 12B to FIG. 19A.

In step S203, the control unit 201 determines whether or not the marker 802 is displayed in accordance with the video. In a case in which the control unit 201 determines that the marker 802 is displayed, processing of step S204 is executed. In a case in which the control unit 201 determines that the marker 802 is not displayed, processing of step S110 is executed.

In step S204, the control unit 201 changes the size of the marker 802 based on the zoom magnification calculated in step S104, and the control unit 201 disposes the marker 802 in the center of the video region. Specifically, in a case in which the zoom magnification calculated in step S104 is 1/2, the control unit 201 enlarges the marker 802 so that the size (vertical size and horizontal size) of the marker 802 each becomes a reciprocal (twice) of the zoom magnification. By setting the zoom magnification to 1/2, the size of the marker 802 displayed in the video region changes from FIG. 12F to FIG. 19B. That is, while an operation of reduction is being received, the marker 802 that is a superimposition member is enlarged and displayed as a reduction magnification decreases.

In step S205, the control unit 201 changes the angle of view frame 801 displayed in step S102 to an angle of view frame indicating a pinch-out. Specifically, as shown in FIG. 18B, an outward arrow 812 is displayed near the angle of view frame 801. A combination of the arrow 812 and the angle of view frame 801 is an example of the angle of view frame indicating the pinch-out. The angle of view frame indicating the pinch-out need only be distinguishable from the angle of view frame indicating the pinch-in, and is not limited to a display form such as the display form in FIG. 18B.

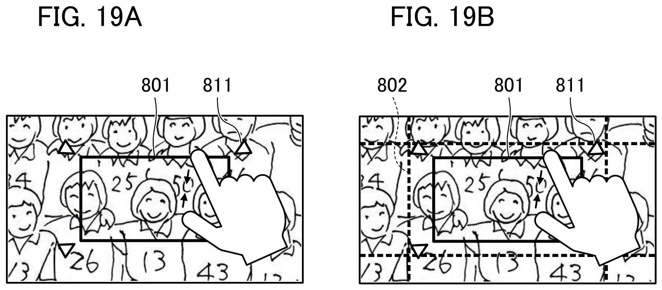

In step S206, in a case in which the size of the marker 802 was changed in step S109 or step S204, the control unit 201 returns the marker 802 to the state before the pinch operation and displays the marker 802 on the display unit 206. In a case in which the marker 802 is reduced as shown in FIG. 13G, the marker 802 is returned to the state before the pinch operation as shown in FIG. 13E. In a case in which the marker 802 is enlarged as shown in FIG. 19B, the marker 802 is returned to the state before the pinch operation as shown in FIG. 12E.

As explained above, in the Second Embodiment, even in a case in which the angle of view of the video of the camera after zooming is adjusted without performing a reduced display of the video, the marker can be displayed in accordance with the angle of view of the video of the camera after zooming.

### <Third Embodiment>

An explanation will be provided with respect to a Third Embodiment of the present disclosure. In the Third Embodiment, an explanation will be provided with respect to a case in which the marker is temporarily hidden while the angle of view of the video of the camera after zooming is being adjusted. Since the camera of the present embodiment is similar to the camera shown in FIG. 1 to FIG. 3 and the display control apparatus of the present embodiment is similar to the display control apparatus shown in FIG. 1 to FIG. 3, explanation is omitted.

### <Explanation of Zoom Angle of View Adjustment Processing Flow by Pinch Operation>

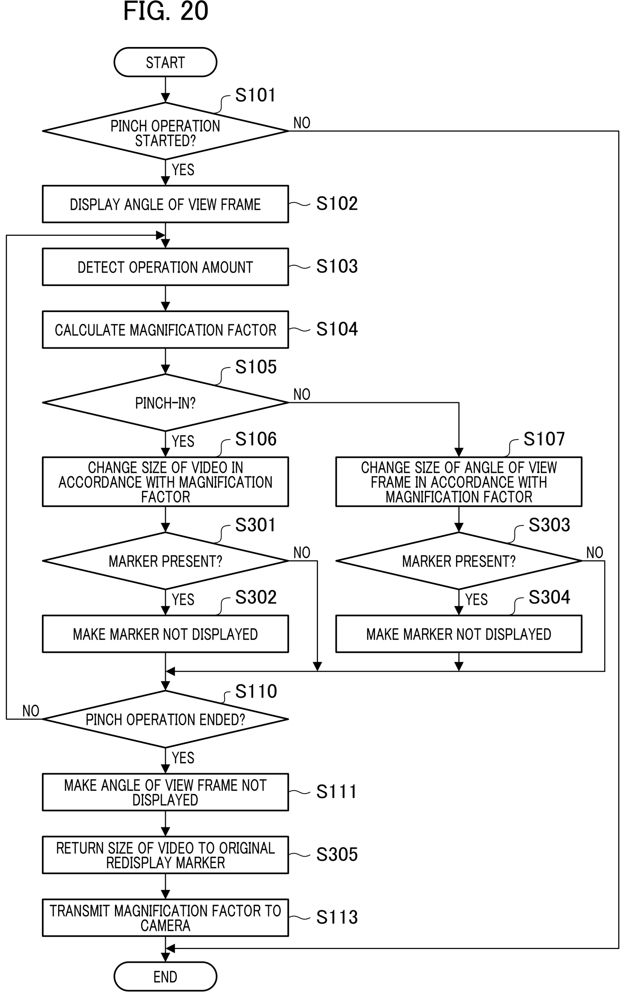

FIG. 20 is a flowchart of zoom angle of view adjustment processing by a pinch operation in the mobile phone 200 according to the Third Embodiment of the present disclosure. The flowchart of FIG. 20 is realized by the control unit 201 loading the program recorded in the non-volatile memory 203 into the work memory 204 and executing the program. Among the steps of the flowchart of FIG. 20, for steps that perform the same processing as corresponding steps of the flowchart of FIG. 14, the same reference numerals as in FIG. 14 are assigned, and explanation thereof is omitted.

In step S301, the control unit 201 determines whether or not the marker 802 is displayed in accordance with the video. In a case in which the control unit 201 determines that the marker 802 is displayed, processing of step S302 is executed. In a case in which the control unit 201 determines that the marker 802 is not displayed, processing of step S110 is executed.

In step S302, the control unit 201 temporarily hides the marker 802. In a case in which the marker 802 is displayed before the pinch operation as shown in FIG. 12E, the marker 802 is temporarily hidden during the pinch-in operation as shown in FIG. 12C.

In step S303, the control unit 201 determines whether or not the marker 802 is displayed in accordance with the video. In a case in which the control unit 201 determines that the marker 802 is displayed, processing of step S304 is executed. In a case in which the control unit 201 determines that the marker 802 is not displayed, processing of step S110 is executed.

In step S304, the control unit 201 temporarily hides the marker 802. In a case in which the marker 802 is displayed before the pinch operation as shown in FIG. 13E, the marker 802 is temporarily hidden during the pinch-out operation as shown in FIG. 13C.

In step S305, in a case in which the size of the video was changed in step S106, the control unit 201 returns the video to the size before the pinch operation and the control unit 201 displays the video on the display unit 206. Specifically, in a case in which the video is displayed reduced as shown in FIG. 12C, the size of the video is returned to the state before the pinch operation as shown in FIG. 12A. Furthermore, in step S305, in a case in which the marker is temporarily hidden in step S302 or step S304, the control unit 201 redisplays the marker in the video region. In a case in which the marker 802 is temporarily hidden as shown in FIG. 12C, the marker 802 is redisplayed as shown in FIG. 12E. In a case in which the marker 802 is temporarily hidden as shown in FIG. 13C, the marker 802 is redisplayed as shown in FIG. 13E.

As explained above, in the Third Embodiment, by temporarily hiding the marker while the angle of view of the video of the camera after zooming is being adjusted, information displayed superimposed on the video is suppressed, and visibility of the video can be secured.

### <Fourth Embodiment>

An explanation will be provided with respect to a Fourth Embodiment of the present disclosure. In the Fourth Embodiment, an explanation will be provided with respect to a case in which a predetermined marker is set to be displayed while the angle of view of the video of the camera after zooming is being adjusted. Since the camera, being a constituent element of the present embodiment, is similar to the camera in FIG. 1 to FIG. 3 and since the display control apparatus, being a constituent element of the present embodiment, is similar to the display control apparatus in FIG. 1 to FIG. 3, explanation is omitted.

### <Explanation of Zoom Angle of View Adjustment Processing Flow by Pinch Operation>

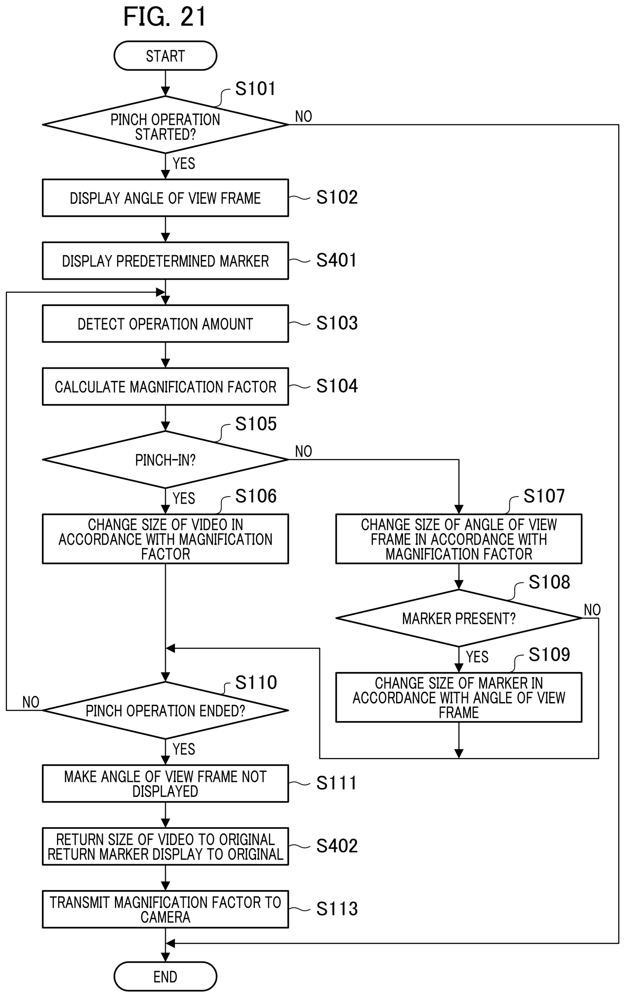

FIG. 21 is a flowchart of zoom angle of view adjustment processing by a pinch operation in the mobile phone 200 according to the Fourth Embodiment of the present disclosure. The flowchart of FIG. 21 is realized by the control unit 201 loading a program recorded in the non-volatile memory 203 into the work memory 204 and executing the program. Among the steps of the flowchart of FIG. 21, for steps that perform the same processing as corresponding steps of the flowchart of FIG. 14, the same reference numerals as in FIG. 14 are assigned, and explanation thereof is omitted.

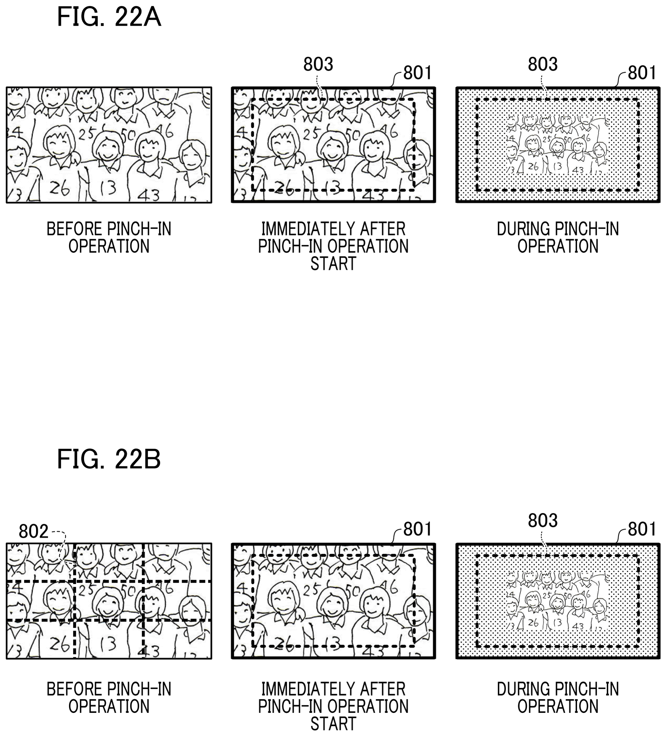

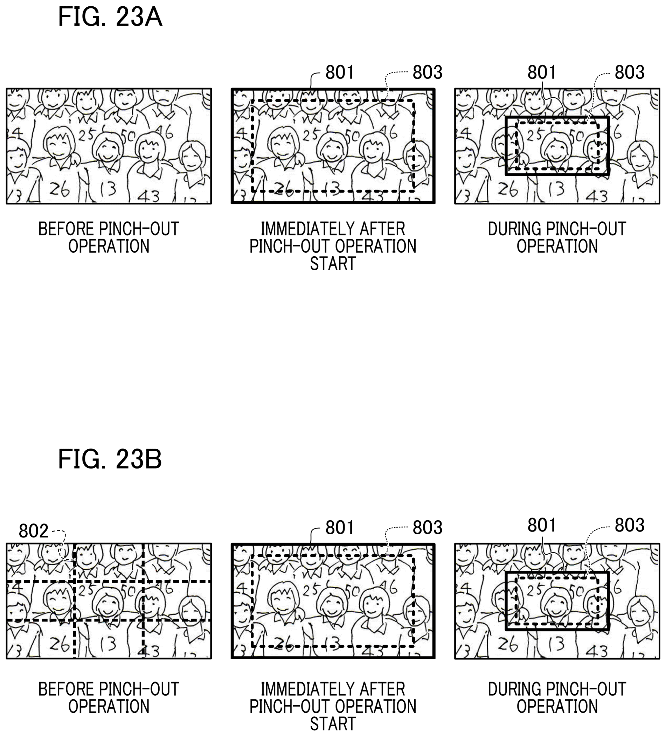

In step S401, the control unit 201 displays a predetermined marker in the video region (in the example of FIG. 4A and FIG. 4B, and FIG. 6A and FIG. 6B, the main video region 450) displayed on the display unit 206. As shown in FIG. 22A and FIG. 23A, in a case in which the marker is not displayed before the pinch operation, the control unit 201 displays a predetermined marker 803 in the video region immediately after the start of the pinch operation. As shown in FIG. 22B and FIG. 23B, in a case in which the marker 802 is displayed before the pinch operation, the control unit 201 displays the predetermined marker 803 in the video region instead of the marker 802. In the example of FIG. 22A and FIG. 22B, and FIG. 23A and FIG. 23B, the marker 802 is a grid marker, and the marker 803 is a safety zone marker. It should be noted that the marker 802 and the marker 803 may be other types of markers other than the grid marker or the safety zone marker. In addition, the marker 802 and the marker 803 may be different types of markers, or may be the same type of marker.

In step S402, in a case in which the size of the video was changed in step S106, the control unit 201 returns the video to the size before the pinch operation and displays the video on the display unit 206. As shown in FIG. 22A and FIG. 22B, in a case in which the video is displayed reduced during the pinch operation, the size of the video is returned to the state before the pinch operation. Furthermore, in step S402, the control unit 201 returns the marker 802 displayed in the video region to the state before the pinch operation. In a case in which a marker is not displayed before the pinch operation, the control unit 201 hides the marker 803 as shown in FIG. 22A and FIG. 23A. In a case in which the marker 802 is displayed before the pinch operation, the control unit 201 hides the marker 803 and displays the marker 802 in accordance with the video as shown in FIG. 22B and FIG. 23B.

It should be noted that, in the flowchart of FIG. 21, although an explanation was provided with respect to an example of displaying the predetermined marker during the pinch operation, the marker may be a marker designated by the user.

As explained above, in the Fourth Embodiment, since the predetermined marker is displayed while the angle of view of the video of the camera after zooming is being adjusted, marker display suitable for adjustment of the angle of view of the video can be performed.

### <Fifth Embodiment>

An explanation will be provided with respect to a Fifth Embodiment of the present disclosure. In the Fifth Embodiment, an explanation will be provided with respect to a case of displaying a subject frame instead of the marker in adjustment of the angle of view of the video of the camera after zooming. In contrast to the marker being displayed in accordance with the angle of view of the video, the subject frame is displayed in accordance with a subject included in the video. The subject frame is, for example, a face detection frame, a pupil detection frame, an automatic tracking frame in a case in which image capturing is performed by automatically tracking a person, and the like. Since the camera of the present embodiment is similar to the camera in FIG. 1 to FIG. 3 and since the display control apparatus of the present embodiment is similar to the display control apparatus in FIG. 1 to FIG. 3, explanation is omitted.

### <Explanation of Zoom Angle of View Adjustment Processing Flow by Pinch Operation>

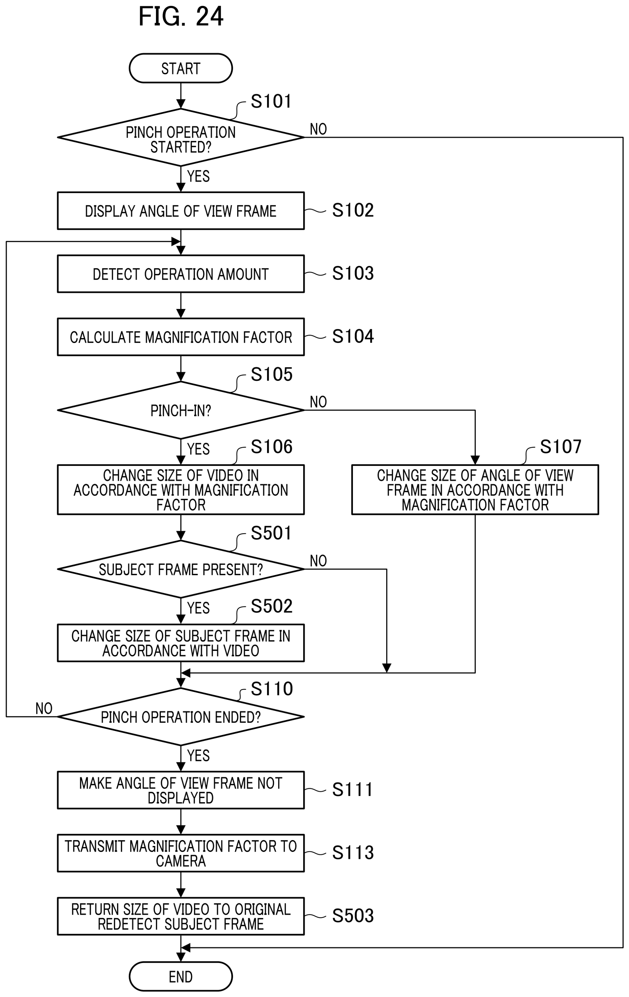

FIG. 24 is a flowchart of zoom angle of view adjustment processing by a pinch operation in the mobile phone 200 according to the Fifth Embodiment of the present disclosure. In the flowchart of FIG. 24, an explanation will be provided with respect to an example of displaying a face detection frame as a subject frame. The flowchart of FIG. 24 is realized by the control unit 201 loading the program recorded in the non-volatile memory 203 into the work memory 204 and executing the program. Among the steps of the flowchart of FIG. 24, for steps that perform the same processing as corresponding steps of the flowchart of FIG. 14, the same reference numerals as in FIG. 14 are assigned, and explanation thereof is omitted.

In step S501, the control unit 201 determines whether or not a subject frame is displayed in the video region (in the example of FIG. 4A and FIG. 4B, and FIG. 6A and FIG. 6B, the main video region 450) displayed on the display unit 206. In a case in which the control unit 201 determines that the subject frame is displayed, processing of step S502 is executed. In a case in which the control unit 201 determines that the subject frame is not displayed, processing of step S110 is executed. The subject frame is a frame for specifying a subject such as a face detected from the video of the camera 100. Although a method for detecting the subject is, for example, YOLO (You Only Look Once) that is an object detection technology by deep learning, the method need only be a method capable of detecting the subject.

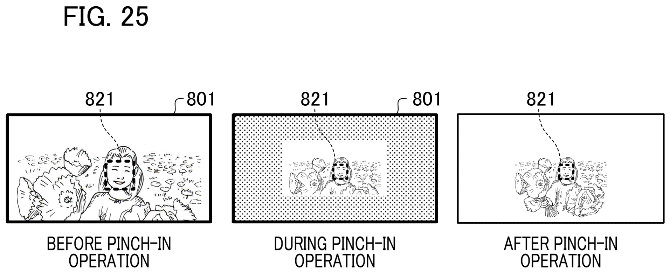

In step S502, the control unit 201 changes the size of the subject frame in accordance with the video the size of which was changed in step S106. The control unit 201, in a case in which the video displayed in the video region is reduced as shown in FIG. 25, also reduces the size of the subject frame 821 in accordance with the video.

In step S110, the control unit 201 determines whether or not the pinch operation in the operation unit 205 has ended. In a case in which the control unit 201 determines that the pinch operation has ended, processing of step S111 is executed. In a case in which the control unit 201 determines that the pinch operation has not ended, the processing is continued by returning to step S103.

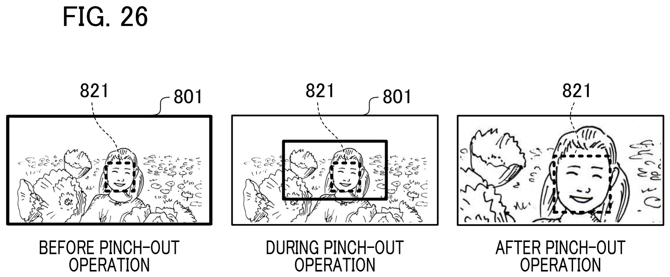

When it is determined in step S110 that the pinch operation has ended, in step S113, the control unit 201 transmits the zoom magnification calculated in step S104 to the camera 100, and the control unit 201 changes the zoom magnification of the camera 100. In step S503, the control unit 201 receives the video of the camera 100 after the change of the zoom magnification, and the control unit 201 redetects the subject with respect to the received video. Furthermore, the control unit 201 displays the subject frame for specifying the detected subject on the video of the camera 100 displayed in the video region as shown in FIG. 25 and FIG. 26.

As explained above, in the Fifth Embodiment, even in a case in which the angle of view of the video of the camera after zooming is adjusted, the subject frame can be appropriately displayed.

### <Other Embodiments>

Although the present disclosure has been described in detail above based on preferred embodiments thereof, the present disclosure is not limited to the specific embodiments, and various forms within a range not departing from the gist of the present disclosure are also included in the present disclosure. Parts of the above-described embodiments may be combined as appropriate.

In addition, the present disclosure also includes a case in which a software program for realizing the functions of the above-described embodiments is supplied directly from a recording medium or by using wired/wireless communication to a system or an apparatus having a computer capable of executing the program, and the program is executed.

Accordingly, in order to realize functional processing of the present disclosure by a computer, a program code itself supplied and installed in the computer also realizes the present disclosure. That is, a computer program itself for realizing the functional processing of the present disclosure is also included in the present disclosure. In that case, if the program has program functionality, the form of the program is not limited and may be, for example, object code, a program executed by an interpreter, script data supplied to an OS, and the like.

As a recording medium for supplying the program, for example, magnetic recording media such as a hard disk, a magnetic tape, and the like, an optical/magnetooptical storage medium, or a non-volatile semiconductor memory may be used. In addition, as a method for supplying the program, a method in which a computer program forming the present disclosure is stored in a server on a computer network, and a connected client computer downloads and executes the computer program is also conceivable.

The present disclosure can also be realized by a process in which a program for realizing one or more functions of the above-described embodiments is supplied to a system or an apparatus via a network or a storage medium, and one or more processors in a computer of the system or the apparatus read out and execute the program. In addition, the present disclosure can also be realized by a circuit (for example, an ASIC) for realizing one or more functions.

As described above, although an explanation has been provided with respect to preferred embodiments of the present disclosure, the present disclosure is not limited to the embodiments, and various modifications and changes are possible within the scope of the gist thereof.

Embodiment(s) of the present disclosure can also be realized by a computer of a system or apparatus that reads out and executes computer executable instructions (e. g. , one or more programs) recorded on a storage medium (which may also be referred to more fully as a 'non-transitory computer-readable storage medium') to perform the functions of one or more of the above-described embodiment(s) and/or that includes one or more circuits (e. g. , application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A display control apparatus comprising:
an input means (202) for inputting an input image;
an operation means (205) for receiving an operation of enlargement/reduction; and
a display control means (201) for, while the operation means is receiving the operation of enlargement, superimposing a frame indicating a second region according to enlargement magnification on the input image in accordance with a first region displayed by a display means (206), and displaying, on the display means, the input image on which the frame is superimposed, and for, while the operation means is receiving the operation of reduction, superimposing the input image in accordance with a third region according to reduction magnification on a background image in accordance with the first region, and displaying, on the display means, the background image on which the input image is superimposed.

2. The display control apparatus according to claim 1,
wherein a color of the background image is a color not included in a superimposition member superimposed on the first region of the input image.

3. The display control apparatus according to claim 2,
wherein the display control means displays the superimposition member on the display means in accordance with the second region while the operation means is receiving the operation of enlargement, and displays the superimposition member on the display means in accordance with the first region while the operation means is receiving the operation of reduction.

4. A display control apparatus comprising:
an input means (202) for inputting an input image;
an operation means (205) for receiving an operation of enlargement/reduction; and
a display control means (201) for, while the operation means is receiving the operation of enlargement, superimposing a frame indicating a second region according to enlargement magnification on the input image in accordance with a first region displayed by a display means (206), and displaying, on the display means, the input image on which the frame is superimposed, and for, while the operation means is receiving the operation of reduction, superimposing a frame indicating a third region according to reduction magnification on the input image in accordance with the first region, and displaying, on the display means, the input image on which the frame is superimposed.

5. The display control apparatus according to claim 4,
wherein the display control means, while the operation means is receiving the operation of enlargement, displays a superimposition member in the first region of the input image on the display means in accordance with the second region, and
while the operation means is receiving the operation of reduction, enlarges the superimposition member and displays the superimposition member on the display means as the reduction magnification becomes smaller.

6. The display control apparatus according to claim 1 or 4, further comprising:
a setting means (500) for performing setting of a display form of a superimposition member, and
wherein the display control means displays the superimposition member on the display means in the first region of the input image based on the setting by the setting means.

7. The display control apparatus according to claim 6,
wherein the display control means hides the superimposition member while the operation means is receiving the operation of enlargement/reduction.

8. The display control apparatus according to any one of claims 1 to 7,
wherein a superimposition member superimposed on the first region of the input image is a marker.

9. The display control apparatus according to any one of claims 1 to 8, further comprising:
a superimposition means (400) for superimposing, on the input image, a frame that specifies a subject included in the input image.

10. The display control apparatus according to any one of claims 1 to 9, further comprising:
a communication means (211, 212) for performing communication with an image capturing apparatus; and
a control means (201) for controlling the image capturing apparatus via the communication after the operation of enlargement/reduction ends so that zoom magnification is changed according to the enlargement/reduction magnification, and
wherein the input image is an image received from the image capturing apparatus via the communication.

11. A display control method comprising:
inputting an input image;
receiving an operation of enlargement/reduction; and
while receiving the operation of enlargement, superimposing a frame indicating a second region according to enlargement magnification on the input image in accordance with a first region displayed by a display means, and displaying, on the display means, the input image on which the frame is superimposed, and
while receiving the operation of reduction, superimposing the input image in accordance with a third region according to reduction magnification on a background image in accordance with the first region, and displaying, on the display means, the background image on which the input image is superimposed.

12. A display control method comprising:
inputting an input image;
receiving an operation of enlargement/reduction; and
while receiving the operation of enlargement, superimposing a frame indicating a second region according to enlargement magnification on the input image in accordance with a first region displayed by a display means, and displaying, on the display means, the input image on which the frame is superimposed, and
while receiving the operation of reduction, superimposing a frame indicating a third region according to reduction magnification on the input image in accordance with the first region, and displaying, on the display means, the input image on which the frame is superimposed.

13. A program for causing a computer to execute the display control method according to claim 11 or 12.
